(19) Europäisches Patentamt
European Patent Office
Office européen des brevets

(11) **EP 4 757 472 A1**

(12) **EUROPEAN PATENT APPLICATION**
published in accordance with Art. 153(4) EPC

(43) Date of publication:
**10.06.2026 Bulletin 2026/24**

(21) Application number: **24852196.5**

(22) Date of filing: **01.08.2024**

(51) International Patent Classification (IPC):
$H04W\ 72/232^{(2023.01)}$  $H04W\ 72/1268^{(2023.01)}$
$H04W\ 72/21^{(2023.01)}$  $H04W\ 72/0446^{(2023.01)}$
$H04W\ 72/0453^{(2023.01)}$  $H04W\ 72/231^{(2023.01)}$
$H04W\ 72/53^{(2023.01)}$  $H04W\ 48/08^{(2009.01)}$
$H04W\ 8/24^{(2009.01)}$  $H04L\ 5/00^{(2006.01)}$

(52) Cooperative Patent Classification (CPC):
H04L 5/00; H04L 5/14; H04W 8/24; H04W 48/08;
H04W 72/04; H04W 72/0446; H04W 72/0453;
H04W 72/12; H04W 72/1268; H04W 72/21;
H04W 72/231; H04W 72/232; H04W 72/53

(86) International application number:
**PCT/KR2024/011306**

(87) International publication number:
**WO 2025/033842 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.08.2023 KR 20230102474**

(71) Applicant: **Samsung Electronics Co., Ltd.
Suwon-si, Gyeonggi-do 16677 (KR)**

(72) Inventors:
• **CHOI, Kyungjun
Suwon-si Gyeonggi-do 16677 (KR)**
• **SHIM, Jaeyeon
Suwon-si Gyeonggi-do 16677 (KR)**
• **JI, Hyoungju
Suwon-si Gyeonggi-do 16677 (KR)**
• **CHOE, Hyemin
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND APPARATUS FOR RECEIVING GROUP COMMON SIGNAL IN WIRELESS COMMUNICATION SYSTEM**

(57) The disclosure relates to a 5G or 6G communication system for supporting a higher data transmission rate. Specifically, the present disclosure relates to a method performed by a terminal in a wireless communication system, the method comprising the steps of: receiving, from a base station, configuration information including an SBFD configuration and a TDD configuration, the SBFD configuration including information on an SBFD uplink subband; receiving, from the base station, a DCI format including an uplink transmission cancellation indicator; and identifying, on the basis of the configuration information, a reference uplink resource corresponding to the uplink transmission cancellation indicator.

FIG.12

**Description**

[Technical Field]

The disclosure relates to operations of a UE and a base station in a wireless communication system. Specifically, the disclosure relates to a method for a UE to receive a group-common control channel, and an apparatus capable of performing the same.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

An embodiment of the disclosure is to provide an apparatus and a method capable of effectively providing services in a mobile (or wireless) communication system.

[Solution to Problem]

An embodiment of the disclosure proposes a method for designing an uplink transmission cancellation indication of a UE having a subband non-overlapping full duplex (SBFD) uplink (UL) subband configured therefor in a mobile (or wireless) communication system.

[Advantageous Effects of Invention]

Embodiments set forth herein can provide an apparatus and a method capable of effectively providing services in a mobile communication system.
Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.
FIG. 3 illustrates an example of a bandwidth part configuration in a wireless communication system according to an embodiment of the disclosure.
FIG. 4 illustrates an example of a control resource set configuration of a downlink control channel in a wireless communication system according to an embodiment of the disclosure.
FIG. 5 illustrates a structure of a downlink control channel in a wireless communication system according to an embodiment of the disclosure.
FIG. 6 illustrates a method in which a base station and a UE transmit/receive data in consideration of a downlink data channel and a rate matching resource in a wireless communication system according to an embodiment of the disclosure.
FIG. 7 illustrates an example of frequency domain resource allocation with regard to a physical downlink shared channel (PDSCH) in a wireless communication system according to an embodiment of the disclosure.
FIG. 8 illustrates an example of time domain resource allocation with regard to a PDSCH in a wireless communication system according to an embodiment of the disclosure.
FIG. 9 illustrates an example of time domain resource allocation according to subcarrier spacings with regard to a data channel and a control channel in a wireless communication system according to an embodiment of the disclosure.
FIG. 10 illustrates radio protocol structures of a base station and a UE in single cell, carrier aggregation, and dual connectivity situations according to an embodiment of the disclosure.
FIG. 11 illustrates an example in which SBFD is operated in a time division duplexing (TDD) band of a wireless communication system according to an embodiment of the disclosure.
FIG. 12 is a diagram illustrating a method for determining a reference uplink resource according to an embodiment of the disclosure.
FIG. 13 is a diagram illustrating a method of determining a reference uplink resource according to an embodiment of the disclosure.
FIG. 14 is a diagram illustrating a method of determining a frequency domain of a reference uplink resource according to an embodiment of the disclosure.
FIG. 15 is a diagram illustrating a frequency domain according to an embodiment of the disclosure.

FIG. 16 is a diagram illustrating the operation sequence of a UE according to an embodiment of the disclosure.

FIG. 17 is a diagram illustrating the configuration of a reference uplink resource according to an embodiment of the disclosure.

FIG. 18 is a diagram illustrating types of symbols included in a reference uplink resource according to an embodiment of the disclosure.

FIG. 19 is a diagram illustrating a method of receiving an uplink transmission cancellation indication according to an embodiment of the disclosure.

FIG. 20 illustrates a structure of a UE in a wireless communication system according to an embodiment of the disclosure.

FIG. 21 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions should be made based on the description throughout this specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, long-term evolution (LTE) or LTE-advanced (LTE-A) systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

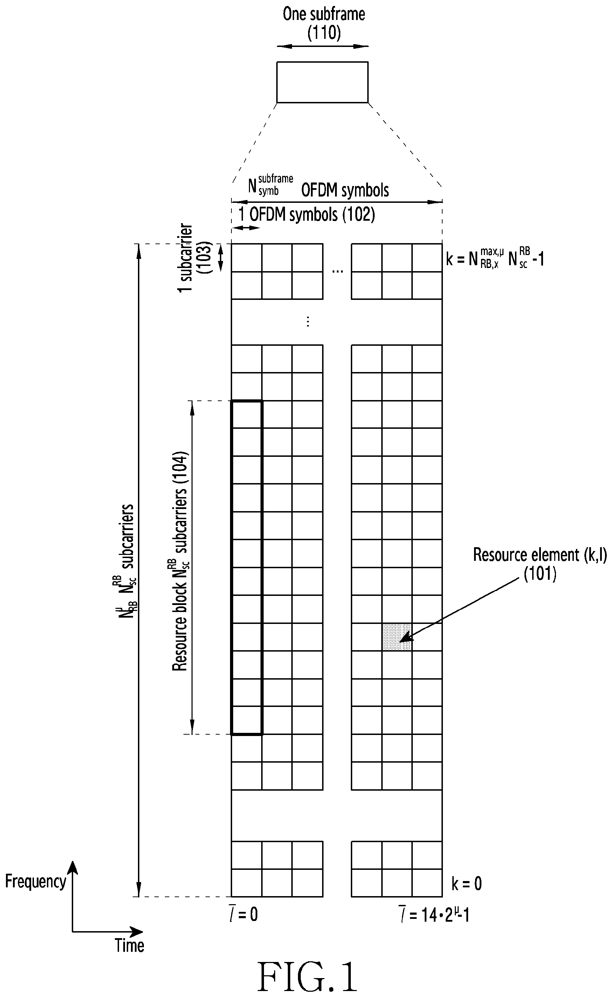

FIG. 1 illustrates a basic structure of a time-frequency domain in a wireless communication system according to an embodiment of the disclosure.

Referring to FIG. 1, a basic structure of a time-frequency domain, which is a radio resource domain used to transmit data or control channels in a 5G system, may be described.

In FIG. 1, the horizontal axis denotes a time domain, and the vertical axis denotes a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

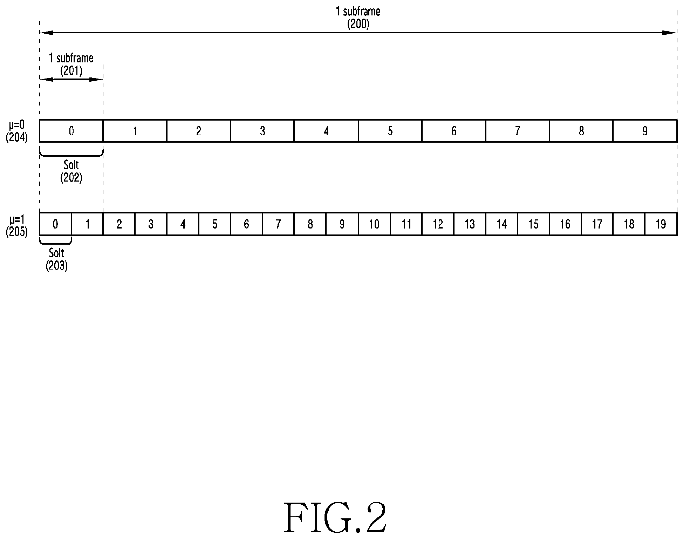

FIG. 2 illustrates a structure of a frame, a subframe, and a slot in a wireless communication system according to an embodiment of the disclosure.

Referring to FIG. 2, an example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu$=0 (204), and a case in which $\mu$=1 (205). In the case of $\mu$=0 (204), one subframe 201 may include one slot 202, and in the case of $\mu$=1 (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

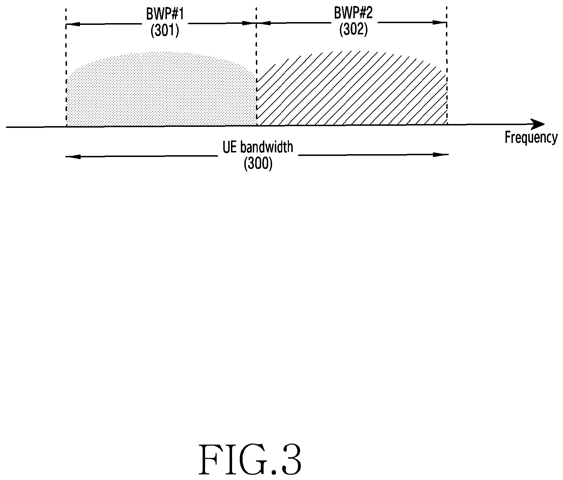

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

| BWP ::= | SEQUENCE { |
|---|---|
| bwp-Id | BWP-Id, |

|  |  |
|---|---|
| (bandwidth part identifier) | |
| locationAndBandwidth | INTEGER (1..65536), |
| (bandwidth part location) | |
| subcarrierSpacing | ENUMERATED {n0, n1, n2, n3, n4, n5}, |
| (subcarrier spacing) | |
| cyclicPrefix | ENUMERATED { extended } |
| (cyclic prefix) | |
| } | |

Obviously, the above example is not limiting, and various parameters related to the bandwidth part may be configured for the UE, in addition to the above configuration information. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify (transmit or deliver) the UE of configuration information, such as frequency allocation information regarding control resource set #0, time allocation information, and numerology, through the MIB. In addition, the base station may notify the UE of configuration information regarding the monitoring periodicity and occasion with regard to control resource set #0, that is, configuration information regarding search space #0, through the MIB. The UE may consider that a frequency domain configured by CORESET #0 acquired from the MIB is an initial bandwidth part for initial access. The ID of the initial bandwidth part may be considered to be 0.

Obviously, the above embodiment is not limiting, and the bandwidth part configuration supported by the 5G communication system, may be used for various purposes.

According to an embodiment, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to an embodiment, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control region (for example, CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered (or configured) as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given in Table 3, for example.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time may support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a time point not later than slot n+$T_{BWP}$, and may transmit/receive a data channel scheduled by the corresponding DCI in the newly changed bandwidth part. If the base station wants to schedule a data channel by using the new bandwidth part, the base station may determine time domain resource allocation regarding the data channel in consideration of the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI indicating a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (for example, K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof may be as follows.

- PSS: A signal which becomes a reference signal for downlink time/frequency synchronization, and may provide some partial information of a cell ID.
- SSS: A reference for downlink time/frequency synchronization, and may provide the remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G communication system will be described in detail.

In a wireless communication system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| - Identifier for DCI formats - [1] bit |
| --- |

(continued)

- Frequency domain resource assignment - $\left\lceil \log_2 (N_{\text{RB}}^{\text{UL,BWP}} (N_{\text{RB}}^{\text{UL,BWP}} + 1)/2) \right\rceil$ bits

- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used as non- fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

    * For resource allocation type 0, $\left\lceil N_{\text{RB}}^{\text{UL,BWP}} / P \right\rceil$ bits

    * For resource allocation type 1, $\left\lceil \log_2 (N_{\text{RB}}^{\text{UL,BWP}} (N_{\text{RB}}^{\text{UL,BWP}} + 1)/2) \right\rceil$ bits

- Time domain resource assignment -1, 2, 3, or 4 bits
- Virtual resource block (VRB)-to-physical resource block (PRB) mapping - 0 or 1 bit, only for resource allocation type 1.
    * 0 bit if only resource allocation type 0 is configured;
    * 1 bit otherwise.
- Frequency hopping flag - 0 or 1 bit, only for resource allocation type 1.
    * 0 bit if only resource allocation type 0 is configured;
    * 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits
    * 1 bit for semi-static HARQ-ACK codebook;
    * 2 bits for dynamic HARQ-ACK codebook with single HARQ-ACK codebook.
- 2nd downlink assignment index - 0 or 2 bits
    * 2 bits for dynamic HARQ-ACK codebook with two HARQ-ACK sub-codebooks;
    * 0 bit otherwise.

- TPC command for scheduled PUSCH - 2 bits

- SRS resource indicator - $\left\lceil \log_2 \left( \sum_{k=1}^{L_{\max}} \binom{N_{\text{SRS}}}{k} \right) \right\rceil$ or $\left\lceil \log_2 (N_{\text{SRS}}) \right\rceil$ bits

    * $\left\lceil \log_2 \left( \sum_{k=1}^{L_{\max}} \binom{N_{\text{SRS}}}{k} \right) \right\rceil$ bits for non-codebook based PUSCH transmission;

    * $\left\lceil \log_2 (N_{\text{SRS}}) \right\rceil$ bits for codebook based PUSCH transmission.

(continued)

| |
|---|
| - Precoding information and number of layers - up to 6 bits<br>- Antenna ports - up to 5 bits<br>- SRS request - 2 bits<br>- Channel state information (CSI) request - 0, 1, 2, 3, 4, 5, or 6 bits<br>- Code block group (CBG) transmission information - 0, 2, 4, 6, or 8 bits<br>- Phase tracking reference signal (PTRS)-demodulation reference signal (DMRS) association - 0 or 2 bits.<br>- beta_offset indicator - 0 or 2 bits<br>- DMRS sequence initialization - 0 or 1 bit |

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

| |
|---|
| - Identifier for DCI formats - [1] bit<br><br>- Frequency domain resource assignment - $\left\lceil \log_2 (N_{RB}^{DL,BWP} (N_{RB}^{DL,BWP} + 1)/2) \right\rceil$ bits<br><br>- Time domain resource assignment - X bits<br>- VRB-to-PRB mapping - 1 bit.<br>- Modulation and coding scheme - 5 bits<br>- New data indicator - 1 bit<br>- Redundancy version - 2 bits<br>- HARQ process number - 4 bits<br>- Downlink assignment index - 2 bits<br>- TPC command for scheduled PUCCH - [2] bits<br>- Physical uplink control channel (PUCCH) resource indicator - 3 bits |
| - PDSCH-to-HARQ feedback timing indicator - [3] bits |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

| |
|---|
| - Carrier indicator - 0 or 3 bits<br>- Identifier for DCI formats - [1] bits<br>- Bandwidth part indicator - 0, 1 or 2 bits<br>- Frequency domain resource assignment<br><br>                                      \* For resource allocation type 0, $\left\lceil N_{RB}^{DL,BWP} / P \right\rceil$ bits<br>                                      \* For resource allocation type 1,<br>         $\left\lceil \log_2 (N_{RB}^{DL,BWP} (N_{RB}^{DL,BWP} + 1)/2) \right\rceil$ bits<br>- Time domain resource assignment -1, 2, 3, or 4 bits<br>- VRB-to-PRB mapping - 0 or 1 bit, only for resource allocation type 1.<br>                                   \* 0 bit if only resource allocation type 0 is configured;<br>                                   \* 1 bit otherwise.<br>- Physical resource block (PRB) bundling size indicator - 0 or 1 bit<br>- Rate matching indicator - 0, 1, or 2 bits<br>- Zero power (ZP) channel state information (CSI)-reference signal (RS) trigger - 0, 1, or 2 bits |
| For transport block 1:<br>- Modulation and coding scheme - 5 bits |

(continued)

| For transport block 1:<br>- New data indicator - 1 bit<br>- Redundancy version - 2 bits |
| --- |
| For transport block 2:<br>- Modulation and coding scheme - 5 bits<br>- New data indicator - 1 bit<br>- Redundancy version - 2 bits<br>- HARQ process number - 4 bits<br>- Downlink assignment index - 0 or 2 or 4 bits<br>- TPC command for scheduled PUCCH - 2 bits<br>- PUCCH resource indicator - 3 bits |
| - PDSCH-to-HARQ_feedback timing indicator - 3 bits<br>- Antenna ports - 4, 5 or 6 bits<br>- Transmission configuration indication - 0 or 3 bits<br>- SRS request - 2 bits<br>- CBG transmission information - 0, 2, 4, 6, or 8 bits<br>- CBG flushing out information - 0 or 1 bit<br>- DMRS sequence initialization - 1 bit |

[PDCCH: CORESET, resource element group (REG), control channel element (CCE), and search space]

Hereinafter, a downlink control channel in a 5G communication system will be described in more detail with reference to the accompanying drawings.

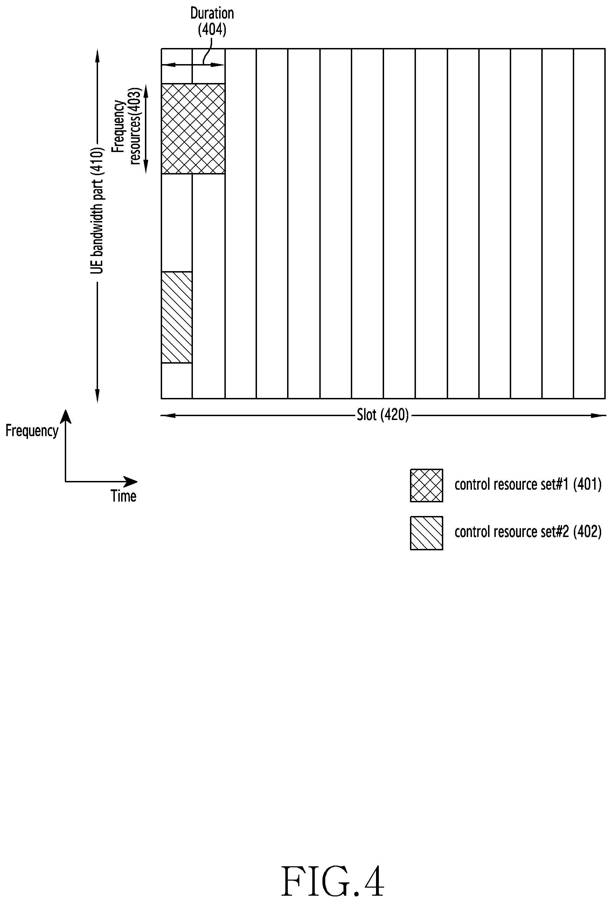

FIG. 4 illustrates an example of a configuration of a control resource set (CORESET) used to transmit a downlink control channel in a wireless communication system according to an embodiment of the disclosure.

FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in the 5G communication system described above may be configured for a UE by a base station through upper layer signaling (for example, system information, master information block (MIB), radio resource control (RRC) signaling). The description that a control resource set is configured for a UE may mean that at least one piece of information among the identity, frequency location, and symbol duration of a control resource set is provided. For example, the control resource set may include the following pieces of information in Table 8.

[Table 8]

| ControlResourceSet ::= | SEQUENCE { |
|---|---|
| -- Corresponds to L1 parameter 'CORESET-ID' | |
| controlResourceSetId | ControlResourceSetId, |
| (control resource set identity)) | |
| frequencyDomainResources | BIT STRING (SIZE (45)), |
| (frequency domain resource assignment information) | |
| duration | INTEGER (1..maxCoReSetDuration), |
| (time domain resource assignment information ) | |
| cce-REG-MappingType | CHOICE { |
| (CCE-to-REG mapping scheme) | |
| interleaved | SEQUENCE { |
| reg-BundleSize | ENUMERATED {n2, n3, n6}, |
| (REG bundle size) | |
| precoderGranularity | ENUMERATED {sameAsREG-bundle, allContiguousRBs}, |
| interleaverSize | ENUMERATED {n2, n3, n6} |
| (interleaver size) | |
| shiftIndex | INTEGER(0..maxNrofPhysicalResourceBlocks-1) OPTIONAL |
| (interleaver shift) | |
| }, | |
| nonInterleaved | NULL |
| }, | |
| tci-StatesPDCCH StatesPDCCH)) OF TCI-StateId | SEQUENCE(SIZE (1..maxNrofTCI- OPTIONAL, |
| (QCL configuration information) | |
| tci-PresentInDCI | ENUMERATED {enabled} |
| OPTIONAL,      -- Need S | |

| } |
|---|

In Table 8, tci-StatesPDCCH(simply referred to as transmission configuration indication (TCI) state)configuration information may include information of one or multiple SS/PBCH block indexes or channel state information reference signal (CSI-RS) indexes, which are quasi-co-located (QCLed) with a DMRS transmitted in a corresponding control resource set.

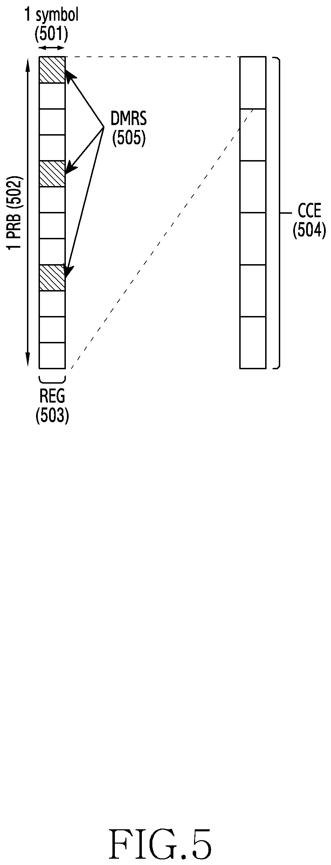

FIG. 5 illustrates a structure of a downlink control channel in a wireless communication system according to an embodiment of the disclosure.

FIG. 5 illustrates an example of a basic unit of time and frequency resources constituting a downlink control channel available in 5G. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element (CCE) 504 as illustrated in FIG. 5, one CCE 504 may include multiple REGs 503. To describe the REG 503 illustrated in FIG. 5, for example, the REG 503 may include 12 REs, and if one CCE 504 includes six REGs503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL. Since 1, 2, 4, 8, or 16 CCEs constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the at least one piece of information configured for the UE may include at least one of the following pieces of information in Table 9.

[Table 9]

```
SearchSpace ::=                          SEQUENCE {
    -- Identity of the search space. SearchSpaceId = 0 identifies the SearchSpace configured via
    PBCH (MIB) or ServingCellConfigCommon.
    searchSpaceId                        SearchSpaceId,
    (search space identity)
    controlResourceSetId                 ControlResourceSetId,
    (control resource set identity)
    monitoringSlotPeriodicityAndOffset   CHOICE {
    (monitoring slot level periodicity)
        sl1                              NULL,
        sl2                              INTEGER (0..1),
        sl4                              INTEGER (0..3),
        sl5                          INTEGER (0..4),
        sl8                              INTEGER (0..7),
        sl10                             INTEGER (0..9),
        sl16                             INTEGER (0..15),
        sl20                             INTEGER (0..19)
    }
        OPTIONAL,
    duration(monitoring duration)        INTEGER (2..2559)
    monitoringSymbolsWithinSlot              BIT STRING (SIZE (14))
        OPTIONAL,
    (monitoring symbols within slot)
    nrofCandidates                       SEQUENCE {
    (number of PDCCH candidates for each aggregation level)
        aggregationLevel1                ENUMERATED {n0, n1, n2, n3, n4, n5, n6, n8},
        aggregationLevel2                ENUMERATED {n0, n1, n2, n3, n4, n5, n6, n8},
        aggregationLevel4                ENUMERATED {n0, n1, n2, n3, n4, n5, n6, n8},
        aggregationLevel8                ENUMERATED {n0, n1, n2, n3, n4, n5, n6, n8},
```

```
        aggregationLevel16                    ENUMERATED {n0, n1, n2, n3, n4, n5, n6,
n8}
},


        searchSpaceType                       CHOICE {
(search space type)
-- Configures this search space as common search space (CSS) and DCI formats to monitor.
common                                SEQUENCE {
(common search space)
    }
ue-Specific                           SEQUENCE {
(UE-specific search space)
        -- Indicates whether the UE monitors in this USS for DCI formats 0-0 and 1-0 or for
formats 0-1 and 1-1.
        formats                               ENUMERATED    {formats0-0-And-1-0,
formats0-1-And-1-1},
        ...
    }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

Combinations of DCI formats and RNTIs given below may be monitored in a UE-specific search space. Obviously, the examples given below are not limiting.

DCI format 0_0/1_0 with CRC scrambled by C-RNTI, CS-RNTI, TC-RNTI
DCI format 1_0/1_1 with CRC scrambled by C-RNTI, CS-RNTI, TC-RNTI
Enumerated RNTIs may follow the definition and usage given below
Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured

Transmit power control for PUSCH RNTI (TPC-PUSCH-RNTI): used to indicate a power control command regarding a PUSCH

Transmit power control for PUCCH RNTI (TPC-PUCCH-RNTI): used to indicate a power control command regarding a PUCCH

Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- $L$: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- $i = 0, ..., L -1$
- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0$, $A_p = 39827$ *for p mod* 3 = 0, $A_p = 39829$ *for p mod* 3 = 1, $A_p = 39839$ *for p mod* 3 = 2, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[PDCCH: BD/CCE limit]

If there are multiple search space sets configured for a UE, the following conditions may be considered in connection with a method for determining a search space set to be monitored by the UE.

If the value of "monitoringCapabilityConfig-r16" (upper layer signaling) has been configured to be "r15monitoringcapability" for the UE, the UE defines maximum values regarding the number of PDCCH candidates that can be monitored and the number of CCEs constituting the entire search space (as used herein, the entire search space refers to the entire CCE set corresponding to a union domain of multiple search space sets) with regard to each slot. If the value of "monitoringCapabilityConfig-r16" has been configured to be "r16monitoringcapability", the UE defines maximum values regarding the number of PDCCH candidates that can be monitored and the number of CCEs constituting the entire search space (as used herein, the entire search space refers to the entire CCE set corresponding to a union domain of multiple search space sets) with regard to each span.

[Condition 1: maximum number of PDCCH candidates limited]

According to the above-mentioned upper layer signaling configuration value, the maximum number $M^\mu$ of PDCCH candidates that the UE can monitor may follow Table 11 given below if the same is defined with reference to a slot in a cell configured to have a subcarrier spacing of $15 \cdot 2^\mu$ kHz, and may follow Table 12 given below if the same is defined with reference to a span.

[Table 11]

| $\mu$ | Maximum number of PDCCH candidates per slot and per serving cell ($M^\mu$) |
|---|---|
| 0 | 44 |
| 1 | 36 |
| 2 | 22 |
| 3 | 20 |

[Table 12]

| | Maximum number $M^\mu$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: maximum number of CCEs limited]

According to the above-mentioned upper layer signaling configuration value, the maximum number $C^\mu$ of CCEs constituting the entire search space (as used herein, the entire search space refers to the entire CCE set corresponding to a union domain of multiple search space sets) may follow Table 13 given below if the same is defined with reference to a slot in a cell configured to have a subcarrier spacing of $15 \cdot 2^\mu$ kHz, and may follow Table 14 given below if the same is defined with reference to a span.

[Table 13]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 14]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For the sake of descriptive convenience, a situation satisfying both conditions 1 and 2 above at a specific time point is defined as "condition A". Therefore, the description that condition A is not satisfied may mean that at least one of conditions 1 and 2 above is not satisfied.

[PDCCH: Overbooking]

According to the configuration of search space sets of the base station, a case in which condition A is not satisfied may occur at a specific time point. If condition A is not satisfied at a specific time point, the UE may select and monitor only some of search space sets configured to satisfy condition A at the corresponding time point. Also, the base station may transmit a PDCCH to the selected search space set.

A method for selecting some search spaces from all configured search space sets may follow methods given below.

If condition A regarding a PDCCH fails to be satisfied at a specific time point (slot), the UE (or the base station) may preferentially select a search space set having a search space type configured as a common search space, among search space sets existing at the corresponding time point, over a search space set configured as a UE-specific search space.

If all search space sets configured as common search spaces have been selected (for example, if condition A is satisfied even after all search spaces configured as common search spaces have been selected), the UE (or the base station) may select search space sets configured as UE-specific search spaces. If there are multiple search space sets configured as UE-specific search spaces, a search space set having a lower search space set index may have a higher priority. UE-specific search space sets may be selected as long as condition A is satisfied, in consideration of the priority.

[Regarding rate matching/puncturing]

Hereinafter, a rate matching operation and a puncturing operation will be described in detail.

If time and frequency resource A to transmit symbol sequence A overlaps time and frequency resource B, a rate matching or puncturing operation may be considered as an operation of transmitting/receiving channel A in consideration of resource C (region in which resource A and resource B overlap). Specific operations may follow the following description.

**Rate matching operation**

The base station may transmit channel A after mapping the same only to remaining resource domains other than resource C (area overlapping resource B) among the entire resource A which is to be used to transmit symbol sequence A to the UE. For example, if symbol sequence A is configured as {symbol#1, symbol#2, symbol#3, symbol#4}, if resource A is {resource#1, resource#2, resource#3, resource#4}, and if resource B is {resource#3, resource#5}, the base station may transmit channel A after successively mapping the same to remaining resources {resource#1, resource#2, resource#4} other than {resource#3} corresponding to resource C. Consequently, the base station may transmit symbol sequence {symbol#1, symbol#2, symbol#3} after mapping the same to {resource#1, resource#2, resource#4}, respectively.

The UE may assess resource A and resource B from scheduling information regarding symbol sequence A from the base station. Also, the UE may assess resource C that is a region in which resource A and resource B overlap. The UE may receive symbol sequence A, based on an assumption that symbol sequence A has been mapped and transmitted in the remaining area other than resource C among the entire resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the UE may receive symbol sequence A based on an assumption that the same has been successively mapped to remaining resources {resource#1, resource#2, resource#4} other than {resource#3} (corresponding to resource C) among resource A. Consequently, the UE may perform a series of following receiving operations based on an assumption that symbol sequence {symbol#1, symbol#2, symbol#3} has been transmitted after being mapped to {resource#1, resource#2, resource#4}, respectively.

**Puncturing operation**

If there is resource C (region overlapping resource B) among the entire resource A which is to be used to transmit symbol sequence A to the UE, the base station may map symbol sequence A to the entire resource A. However, the base station may not perform transmission in the resource area corresponding to resource C, and may perform transmission with regard to only the remaining resource area other than resource C among resource A. For example, if symbol sequence A is configured as {symbol#1, symbol#2, symbol#3, symbol#4}, if resource A is {resource#1, resource#2, resource#3, resource#4}, and if resource B is {resource#3, resource#5}, the base station may map symbol sequence A {symbol#1, symbol#2, symbol#3, symbol#4} to resource A {resource#1, resource#2, resource#3, resource#4}, respectively Also, the base station may transmit only symbol sequence {symbol#1, symbol#2, symbol#4} corresponding to remaining resources {resource#1, resource#2, resource#4} other than {resource#3} corresponding to resource C among resource A, and may not transmit {symbol#3} mapped to {resource#3} corresponding to resource C. Consequently, the base station may transmit symbol sequence {symbol#1, symbol#2, symbol#4} after mapping the same to {resource#1, resource#2, resource#4}, respectively.

The UE may assess resource A and resource B from scheduling information regarding symbol sequence A received from the base station. Also, the UE may assess resource C that is a region in which resource A and resource B overlap. The UE may receive symbol sequence A, based on an assumption that symbol sequence A has been mapped to the entire resource A but transmitted only in the remaining region other than resource C among the resource region A. For example, if symbol sequence A is configured as {symbol#1, symbol#2, symbol#3, symbol#4}, resource A is {resource#1, resource#2, resource#3, resource#4}, and resource B is {resource#3, resource#5}, the UE may assume that symbol sequence A {symbol#1, symbol#2, symbol#3, symbol#4} is mapped to resource A {resource#1, resource#2, resource#3, resource#4}, respectively, but {symbol#3} mapped to {resource#3} (corresponding to resource C) is not transmitted. Based on the assumption that symbol sequence {symbol#1, symbol#2, symbol#4} corresponding to remaining resources {resource#1, resource#2, resource#4} other than {resource#3} (corresponding to resource C) among resource A has been mapped and transmitted, the UE may receive the same. Consequently, the UE may perform a series of following receiving operations based on an assumption that symbol sequence {symbol#1, symbol#2, symbol#4} has been transmitted after being mapped to {resource#1, resource#2, resource#4}, respectively.

Hereinafter, a method for configuring a rate matching resource for the purpose of rate matching in a 5G communication system will be described. Rate matching refers to adjusting the size of a signal in consideration of the amount of resources that can be used to transmit the signal. For example, data channel rate matching may mean that a data channel is not mapped and transmitted with regard to specific time and frequency resource domains, and the size of data is adjusted accordingly.

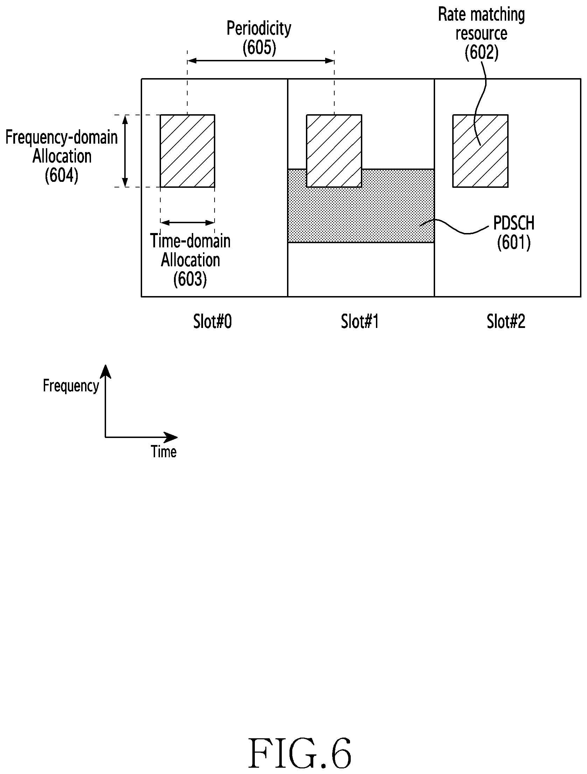

FIG. 6 illustrates a method in which a base station and a UE transmit/receive data in consideration of a downlink data channel and a rate matching resource in a wireless communication system according to an embodiment of the disclosure.

FIG. 6 illustrates a downlink data channel (PDSCH) 601 and a rate matching resource 602. The base station may configure one or multiple rate matching resources 602 for the UE through upper layer signaling (for example, RRC signaling). Rate matching resource 602 configuration information may include time-domain resource allocation information 603, frequency-domain resource allocation information 604, and periodicity information 605. In the following, a bitmap corresponding to the frequency-domain resource allocation information 604 will hereinafter be referred to as "first bitmap", a bitmap corresponding to the time-domain resource allocation information 603 will be referred to as "second bitmap", and a bitmap corresponding to the periodicity information 605 will be referred to as "third bitmap". If all or some of time and frequency resources of the scheduled data channel 601 overlap a configured rate matching resource 602, the base station may rate-match and transmit the data channel 601 in a rate matching resource 602 part. The UE may perform reception and decoding after assuming that the data channel 601 has been rate-matched in a rate matching resource 602 part.

The base station may dynamically notify (or indicate) the UE, through DCI, of whether the PDSCH will be rate-matched in the configured rate matching resource part through an additional configuration (for example, corresponding to "rate matching indicator" inside DCI format described above). To be specific, the base station may select some of the configured rate matching resources and group the selected rate matching resources into rate matching resource groups. The base station may indicate, to the UE, whether data channels are rate-matched to the respective rate matching groups, by using a bitmap scheme through DCI. For example, if four rate matching resources RMR#1, RMR#2, RMR#3, and RMR#4 are configured, the base station may configure a rate matching groups RMG#1={RMR#1, RMR#2}, RMG#2={RMR#3, RMR#4}. Also, the base station may indicate, to the UE, whether rate matching occurs in RMG#1 and RMG#2, respectively, through a bitmap by using two bits inside the DCI field. For example, in a case where rate matching is to be conducted, the base station may indicate this case by "1", and in a case where rate matching is not to be conducted, the base station may indicate this case by "0". Of course, the method of indicating rate matching is not limited to the above-described embodiment.

5G supports granularity of "RB symbol level" and "RE level" as a method for configuring the above-described rate matching resources for a UE. More specifically, the following configuration method may be followed.

## RB symbol level

The UE may have a maximum of four RateMatchPatterns configured per each bandwidth part through upper layer signaling, and one RateMatchPattern may include the following contents.

- may include, in connection with a reserved resource inside a bandwidth part, a resource having time and frequency resource domains of the corresponding reserved resource configured as a combination of an RB-level bitmap and a symbol-level bitmap in the frequency domain. The reserved resource may span one or two slots. A time domain pattern (periodicityAndPattern) may be additionally configured wherein time and frequency domains including respective RB-level and symbol-level bitmap pairs are repeated.
- may include a resource area corresponding to a time domain pattern configured by time and frequency domain resource areas configured by a CORESET inside a bandwidth part and a search space configuration in which corresponding resource areas are repeated.

## RE level

The UE may have the following contents configured through upper layer signaling.

- configuration information (lte-CRS-ToMatchAround) regarding a RE corresponding to a LTE CRS (Cell-specific Reference Signal or common reference signal) pattern, which may include LTE CRS's port number (nrofCRS-Ports) and LTE-CRS-vshift(s) value (v-shift), location information (carrierFreqDL) of a center subcarrier of a LTE carrier from a reference frequency point (for example, reference point A), the LTE carrier's bandwidth size (carrierBandwidthDL) information, subframe configuration information (mbsfn-SubframConfigList) corresponding to a multicast-broadcast single-frequency network (MBSFN), and the like. The UE may determine the position of the CRS inside the NR slot corresponding to the LTE subframe, based on the above-mentioned pieces of information.
- may include configuration information regarding a resource set corresponding to one or multiple zero power (ZP) CSI-RSs inside a bandwidth part.

[Regarding LTE CRS rate match]

Next, a rate matching process regarding the above-mentioned LTE CRS will be described in detail. In NR, for coexistence between long term evolution (LTE) and new RAT (NR) (LTE-NR coexistence), the pattern of cell-specific reference signal (CRS) of LTE may be configured for an NR UE. More specifically, the CRS pattern may be provided by RRC signaling including at least one parameter inside ServingCellConfig IE (information element) or ServingCellConfigCommon IE. Examples of the parameter may include lte-CRS-ToMatchAround, lte-CRS-PatternList1-r16, lte-CRS-PatternList2-r16,crs-RateMatch-PerCORESETPoolIndex-r16, and the like.

Rel-15 NR provides a function by which one CRS pattern can be configured per serving cell through parameter lte-CRS-ToMatchAround. In Rel-16 NR, the above function has been expanded such that multiple CRS patterns can be configured per serving cell. More specifically, a UE having a single-TRP (transmission and reception point) configuration may now have one CRS pattern configured per one LTE carrier, and a UE having a multi-TRP configuration may now have two CRS patterns configured per one LTE carrier. For example, the UE having a single-TRP configuration may have a maximum of three CRS patterns configured per serving cell through parameter lte-CRS-PatternList1-r16. As another example, the UE having a multi-TRP configuration may have a CRS configured for each TRP. For example, the CRS pattern regarding TRP1 may be configured through parameter lte-CRS-PatternList1-r16, and the CRS pattern regarding TRP2 may be configured through parameter lte-CRS-PatternList2-r16. If two TRPs are configured as above, whether the CRS patterns of TRP1 and TRP2 are both to be applied to a specific physical downlink shared channel (PDSCH) or only the CRS pattern regarding one TRP is to be applied is determined through parameter crs-RateMatch-PerCORESETPoolIndex-r16, wherein if parameter crs-RateMatch-PerCORESETPoolIndex-r16 is configured "enabled", only the CRS pattern of one TRP is applied, and both CRS patterns of the two TRPs are applied in other cases.

Table 15 shows a ServingCellConfig IE including the CRS patterns, and Table 16 shows a RateMatchPatternLTE-CRS IE including at least one parameter regarding CRS patterns.

[Table 15]

```
ServingCellConfig ::=                          SEQUENCE {
        tdd-UL-DL-ConfigurationDedicated                    TDD-UL-DL-ConfigDedicated
OPTIONAL,     -- Cond TDD
        initialDownlinkBWP                                  BWP-DownlinkDedicated
OPTIONAL,     -- Need M
        downlinkBWP-ToReleaseList          SEQUENCE (SIZE (1..maxNrofBWPs)) OF
BWP-Id                                 OPTIONAL,    -- Need N
        downlinkBWP-ToAddModList           SEQUENCE (SIZE (1..maxNrofBWPs)) OF
BWP-Downlink                           OPTIONAL,     -- Need N
        firstActiveDownlinkBWP-Id                                        BWP-Id
OPTIONAL,      -- Cond SyncAndCellAdd
        bwp-InactivityTimer              ENUMERATED {ms2, ms3, ms4, ms5, ms6, ms8,
ms10, ms20, ms30,
                                                ms40,ms50,              ms60,
ms80,ms100, ms200,ms300, ms500,
                                                ms750,     ms1280,    ms1920,
ms2560, spare10, spare9, spare8,
                                                spare7, spare6, spare5, spare4,
spare3, spare2, spare1 }        OPTIONAL,    --Need R
        defaultDownlinkBWP-Id                                            BWP-Id
OPTIONAL,     -- Need S
        uplinkConfig                                              UplinkConfig
OPTIONAL,      -- Need M
```

```
        supplementaryUplink                                            UplinkConfig
OPTIONAL,      -- Need M
        pdcch-ServingCellConfig                     SetupRelease { PDCCH-ServingCellConfig }
OPTIONAL,      -- Need M
        pdsch-ServingCellConfig                     SetupRelease { PDSCH-ServingCellConfig }
OPTIONAL,      -- Need M
        csi-MeasConfig                                  SetupRelease { CSI-MeasConfig }
OPTIONAL,      -- Need M
        sCellDeactivationTimer            ENUMERATED {ms20, ms40, ms80, ms160,
ms200, ms240,

                                                              ms320, ms400, ms480, ms520,
ms640, ms720,

                                                              ms840, ms1280, spare2,spare1}
OPTIONAL,      -- Cond ServingCellWithoutPUCCH
        crossCarrierSchedulingConfig                          CrossCarrierSchedulingConfig
OPTIONAL,      -- Need M
        tag-Id                                  TAG-Id,
        dummy                                              ENUMERATED  {enabled}
OPTIONAL,      -- Need R
        pathlossReferenceLinking                       ENUMERATED  {spCell,  sCell}
OPTIONAL,      -- Cond SCellOnly
        servingCellMO                                                     MeasObjectId
OPTIONAL,      -- Cond MeasObject
        ...,
        [[
        lte-CRS-ToMatchAround              SetupRelease { RateMatchPatternLTE-CRS }
OPTIONAL,      -- Need M
        rateMatchPatternToAddModList                                SEQUENCE    (SIZE
(1..maxNrofRateMatchPatterns)) OF RateMatchPattern      OPTIONAL,     -- Need N
        rateMatchPatternToReleaseList                               SEQUENCE    (SIZE
(1..maxNrofRateMatchPatterns)) OF RateMatchPatternId     OPTIONAL,     -- Need N
        downlinkChannelBW-PerSCS-List          SEQUENCE (SIZE (1..maxSCSs)) OF SCS-
SpecificCarrier                        OPTIONAL       -- Need S
        ]],
        [[
        supplementaryUplinkRelease                                ENUMERATED    {true}
OPTIONAL,      -- Need N
        tdd-UL-DL-ConfigurationDedicated-IAB-MT-r16          TDD-UL-DL-ConfigDedicated-
IAB-MT-r16                        OPTIONAL,     -- Cond TDD_IAB
```

```
        dormantBWP-Config-r16              SetupRelease { DormantBWP-Config-r16 }
OPTIONAL,    -- Need M
        ca-SlotOffset-r16              CHOICE {
           refSCS15kHz                    INTEGER (-2..2),
           refSCS30KHz                    INTEGER (-5..5),
           refSCS60KHz                    INTEGER (-10..10),
           refSCS120KHz                   INTEGER (-20..20)
        }
OPTIONAL,    -- Cond AsyncCA
        channelAccessConfig-r16           SetupRelease { ChannelAccessConfig-r16 }
OPTIONAL,    -- Need M
        intraCellGuardBandsDL-List-r16      SEQUENCE (SIZE (1..maxSCSs)) OF
IntraCellGuardBandsPerSCS-r16      OPTIONAL,    -- Need S
        intraCellGuardBandsUL-List-r16      SEQUENCE (SIZE (1..maxSCSs)) OF
IntraCellGuardBandsPerSCS-r16      OPTIONAL,    -- Need S
        csi-RS-ValidationWith-DCI-r16                  ENUMERATED    {enabled}
OPTIONAL,    -- Need R
        lte-CRS-PatternList1-r16          SetupRelease { LTE-CRS-PatternList-r16 }
OPTIONAL,    -- Need M
        lte-CRS-PatternList2-r16          SetupRelease { LTE-CRS-PatternList-r16 }
OPTIONAL,    -- Need M
        crs-RateMatch-PerCORESETPoolIndex-r16       ENUMERATED      {enabled}
OPTIONAL,    -- Need R
        enableTwoDefaultTCI-States-r16              ENUMERATED      {enabled}
OPTIONAL,    -- Need R
        enableDefaultTCI-StatePerCoresetPoolIndex-r16   ENUMERATED      {enabled}
OPTIONAL,    -- Need R
        enableBeamSwitchTiming-r16                   ENUMERATED    {true}
OPTIONAL,    -- Need R
        cbg-TxDiffTBsProcessingType1-r16             ENUMERATED      {enabled}
OPTIONAL,    -- Need R
        cbg-TxDiffTBsProcessingType2-r16             ENUMERATED      {enabled}
OPTIONAL    -- Need R
        ]]
    }
```

[Table 16]

—    *RateMatchPatternLTE-CRS*

The IE *RateMatchPatternLTE-CRS* is used to configure a pattern to rate match around LTE CRS. See TS 38.214 [19], clause 5.1.4.2.

**RateMatchPatternLTE-CRS information element**

```
RateMatchPatternLTE-CRS ::=          SEQUENCE {
      carrierFreqDL                        INTEGER (0..16383),
      carrierBandwidthDL                   ENUMERATED {n6, n15, n25, n50, n75, n100,
spare2, spare1},
      mbsfn-SubframeConfigList                         EUTRA-MBSFN-SubframeConfigList
OPTIONAL,
      nrofCRS-Ports                        ENUMERATED {n1, n2, n4},
      v-Shift                              ENUMERATED {n0, n1, n2, n3, n4, n5}
}


LTE-CRS-PatternList-r16 ::=          SEQUENCE (SIZE (1..maxLTE-CRS-Patterns-r16)) OF
RateMatchPatternLTE-CRS
```

| *RateMatchPatternLTE-CRS* 필드 descriptions |
|---|
| *carrierBandwidthDL* <br> BW of the LTE carrier in number of PRBs (see TS 38.214 [19], clause 5.1.4.2). |
| *carrierFreqDL* <br> Center of the LTE carrier (see TS 38.214 [19], clause 5.1.4.2). |
| *mbsfn-SubframeConfigList* <br> LTE MBSFN subframe configuration (see TS 38.214 [19], clause 5.1.4.2). |
| *nrofCRS-Ports* <br> Number of LTE CRS antenna port to rate-match around (see TS 38 .214 [19], clause 5.1.4.2). |
| *v-Shift* |

Shifting value v-shift in LTE to rate match around LTE CRS (see TS 38.214 [19], clause 5.1.4.2).

[PDSCH: regarding frequency resource allocation]

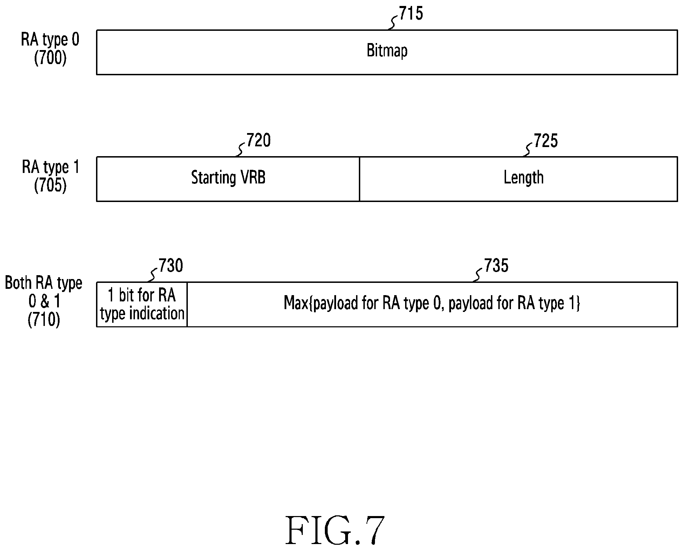

FIG. 7 illustrates an example of frequency domain resource allocation with regard to a physical downlink shared channel (PDSCH) in a wireless communication system according to an embodiment of the disclosure.

FIG. 7 illustrates three frequency domain resource allocation methods of type 0 700, type 1 705, and dynamic switch 710 which can be configured through an upper layer in an NR wireless communication system.

Referring to FIG. 7, in case that a UE is configured to use only resource allocation type 0 through upper-layer signaling (700), partial downlink control information (DCI) for allocating a PDSCH/ to the UE includes a bitmap configured by $N_{RBG}$ bits. As used herein, $N_{RBG}$ refers to the number of resource block groups (RBGs) determined according to the size of the bandwidth part indicated by the bandwidth part indicator and higher layer parameter rbg-Size, as in Table 11 below, and data is transmitted in the RBG marked as 1 by the bitmap.

[Table 17]

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

In case that the UE is configured to use only resource allocation type 1 through upper-layer signaling (705), the DCI for allocating a PDSCH/PUSCH to the UE includes frequency domain resource allocation information configured by as many bits as $\lceil \log_2(N_{RB}^{BWP} * (N_{RB}^{BWP} + 1)/2) \rceil$. The base station may thereby configure a starting VRB 720 and the length 725 of a frequency domain resource allocated continuously therefrom.

In case that the UE is configured to use both resource allocation type 0 and resource allocation type 1 through upper layer signaling (710), partial DCI for allocating a PDSCH to the corresponding UE includes frequency domain resource allocation information including as many bits as the larger value 735 among the payload 715 for configuring resource allocation type 0 and the payload 720 and 725 for configuring resource allocation type 1. One bit may be added to the foremost part (MSB) of the frequency domain resource allocation information inside the DCI, and if the bit has the value of "0", use of resource type 0 may be indicated, and if the bit has the value of "1", use of resource type 1 may be indicated.

[PDSCH/PUSCH: regarding time resource allocation]

Hereinafter, a time domain resource allocation method regarding a data channel in a mobile (or wireless) communication system (e.g., 5G or NR communication system) will be described.

A base station may configure a table for time domain resource allocation information regarding a physical downlink shared channel (e.g., PDSCH) and a physical uplink shared channel (e.g., PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. According to an embodiment, the time domain resource allocation information may include at least one of PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter labeled K2), information regarding the location and length of the start symbol by which a PDSCH or PUSCH is scheduled inside a slot, and the mapping type of a PDSCH or PUSCH. For example, information such as in Table 18 or Table 19 below may be transmitted from the base station to the UE.

[Table 18]

| **PDSCH-TimeDomainResourceAllocationList information element** |
|---|

```
PDSCH-TimeDomainResourceAllocationList ::=   SEQUENCE (SIZE(1..maxNrofDL-
Allocations)) OF PDSCH-TimeDomainResourceAllocation
PDSCH-TimeDomainResourceAllocation ::=       SEQUENCE {
    k0          INTEGER(0..32)                              OPTIONAL,    -- Need
S
    (PDCCH-to-PDSCH timing, slot unit)
mappingType                                ENUMERATED {typeA, typeB},
    (PDSCH mapping type)
startSymbolAndLength                       INTEGER (0..127)
(start symbol and length of PDSCH)
}
```

[Table 19]

| **PUSCH-TimeDomainResourceAllocation information element** |
|---|

```
PUSCH-TimeDomainResourceAllocationList ::=       SEQUENCE (SIZE(1..maxNrofUL-
Allocations)) OF PUSCH-TimeDomainResourceAllocation
PUSCH-TimeDomainResourceAllocation ::=       SEQUENCE {
    k2                    INTEGER(0..32)             OPTIONAL,    -- Need S
    (PDCCH-to-PUSCH timing, slot unit)
    mappingType                                ENUMERATED {typeA, typeB},
    (PUSCH mapping type)
    startSymbolAndLength                       INTEGER (0..127)
    (start symbol and length of PUSCH)
}
```

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

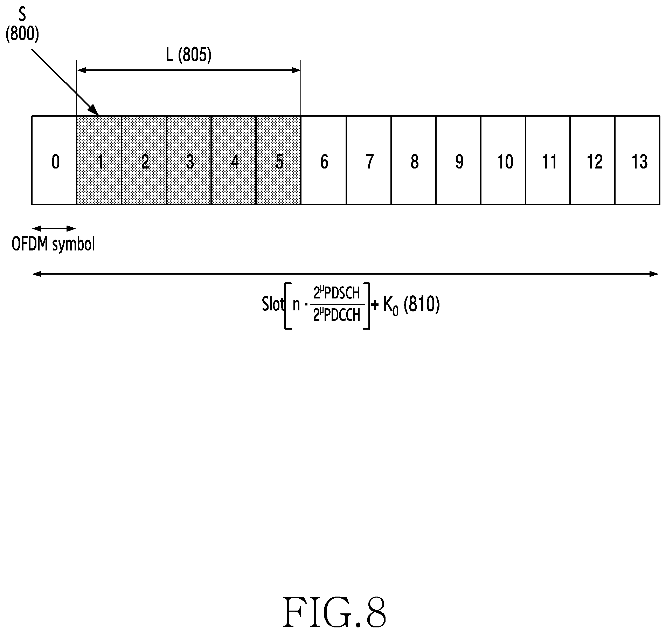

FIG. 8 illustrates an example of time domain resource allocation with regard to a PDSCH in a wireless communication system according to an embodiment of the disclosure;

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using a higher layer, the scheduling offset (K0) value, and the OFDM symbol start location 800 and length 805 within one slot dynamically indicated through DCI.

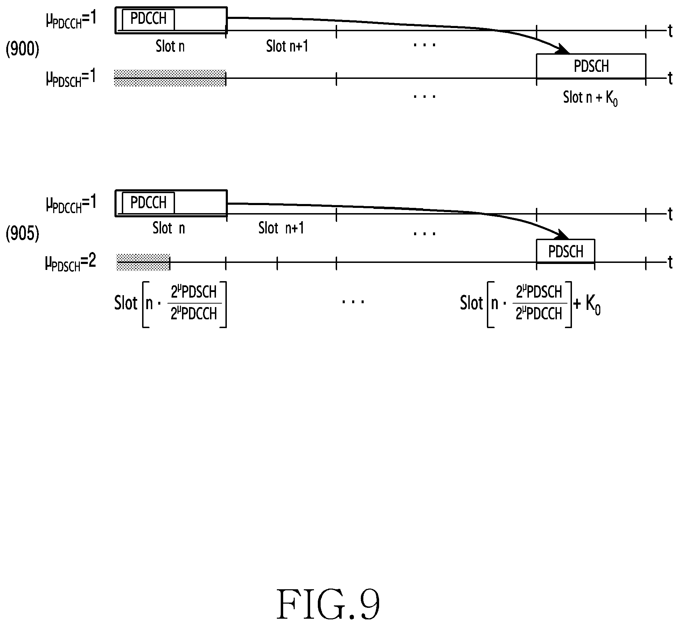

FIG. 9 illustrates an example of time domain resource allocation according to subcarrier spacings with regard to a data channel and a control channel in a wireless communication system according to an embodiment of the disclosure.

Referring to FIG. 9, if the data channel and the control channel have the same subcarrier spacing 900 ($\mu_{PDSCH} =$ $\mu_{PDCCH}$), the slot number for data and that for control are identical, and the base station and the UE may accordingly generate a scheduling offset in conformity with a predetermined slot offset K0. Contrarily, if the data channel and the control channel have different subcarrier spacings 905 ($\mu_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 20 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 20 through upper signaling. If PUSCH transmission is operated by a configured grant, parameters applied to the PUSCH transmission are applied through configuredGrantConfig (upper signaling) in Table 20 except for dataScramblingIdentityPUSCH, txConfig, codebookSubset, maxRank, and scaling of UCI-OnPUSCH, which are provided by pusch-Config (upper signaling) in Table 21. If provided with transformPrecoder inside configuredGrantConfig (upper signaling) in Table 20, the UE applies tp-pi2BPSK inside pusch-Config in Table 21 to PUSCH transmission operated by a configured grant.

[Table 20]

```
ConfiguredGrantConfig ::=            SEQUENCE {
       frequencyHopping                 ENUMERATED {intraSlot, interSlot}
OPTIONAL,    -- Need S,
       cg-DMRS-Configuration            DMRS-UplinkConfig,
       mcs-Table                        ENUMERATED {qam256, qam64LowSE}
OPTIONAL,    -- Need S
       mcs-TableTransformPrecoder       ENUMERATED {qam256, qam64LowSE}
OPTIONAL,    -- Need S
       uci-OnPUSCH                      SetupRelease { CG-UCI-OnPUSCH }
OPTIONAL,    -- Need M
       resourceAllocation               ENUMERATED { resourceAllocationType0,
resourceAllocationType1, dynamicSwitch },
       rbg-Size                         ENUMERATED {config2}
OPTIONAL,    -- Need S
       powerControlLoopToUse            ENUMERATED {n0, n1},
       p0-PUSCH-Alpha                   P0-PUSCH-AlphaSetId,
       transformPrecoder                ENUMERATED {enabled, disabled}
OPTIONAL,    -- Need S
       nrofHARQ-Processes               INTEGER(1..16),
       repK                             ENUMERATED {n1, n2, n4, n8},
       repK-RV                          ENUMERATED {s1-0231, s2-0303, s3-
0000}                                   OPTIONAL,    -- Need R
       periodicity                      ENUMERATED {
                                            sym2, sym7, sym1x14, sym2x14,
sym4x14, sym5x14, sym8x14, sym10x14, sym16x14, sym20x14,
                                            sym32x14, sym40x14, sym64x14,
sym80x14, sym128x14, sym160x14, sym256x14, sym320x14, sym512x14,
                                            sym640x14, sym1024x14,
sym1280x14, sym2560x14, sym5120x14,
```

```
                                                  sym6, sym1x12, sym2x12,
sym4x12, sym5x12, sym8x12, sym10x12, sym16x12, sym20x12, sym32x12,
                                                  sym40x12, sym64x12, sym80x12,
sym128x12, sym160x12, sym256x12, sym320x12, sym512x12, sym640x12,
                                                  sym1280x12, sym2560x12
        },
        configuredGrantTimer                 INTEGER (1..64)
OPTIONAL,     -- Need R
        rrc-ConfiguredUplinkGrant            SEQUENCE {
            timeDomainOffset                     INTEGER (0..5119),
            timeDomainAllocation                 INTEGER   (0..15),
            frequencyDomainAllocation            BIT STRING (SIZE(18)),
            antennaPort                          INTEGER (0..31),
            dmrs-SeqInitialization           INTEGER (0..1)
OPTIONAL,     -- Need R
            precodingAndNumberOfLayers           INTEGER (0..63),
            srs-ResourceIndicator            INTEGER (0..15)
OPTIONAL,     -- Need R
            mcsAndTBS                            INTEGER (0..31),
            frequencyHoppingOffset               INTEGER (1..
maxNrofPhysicalResourceBlocks-1)                 OPTIONAL,     -- Need R
            pathlossReferenceIndex               INTEGER (0..maxNrofPUSCH-
PathlossReferenceRSs-1),
            ...
        }
OPTIONAL,     -- Need R
        ...
}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 21, which is upper signaling, is"codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE may not expect scheduling regarding PUSCH transmission through DCI format 0_0 inside a BWP having no configured PUCCH resource including pucch-spatialRelationInfo. If the UE has no configured txConfig inside pusch-Config in Table 15, the UE does not expect scheduling through DCI format 0_1.

[Table 21]

```
PUSCH-Config ::=                              SEQUENCE {
        dataScramblingIdentityPUSCH              INTEGER (0..1023)
OPTIONAL,      -- Need S
        txConfig                                 ENUMERATED {codebook,
nonCodebook}                                      OPTIONAL,     -- Need S
        dmrs-UplinkForPUSCH-MappingTypeA          SetupRelease { DMRS-UplinkConfig }
OPTIONAL,      -- Need M
        dmrs-UplinkForPUSCH-MappingTypeB          SetupRelease { DMRS-UplinkConfig }
OPTIONAL,      -- Need M


        pusch-PowerControl                        PUSCH-PowerControl
OPTIONAL,      -- Need M
        frequencyHopping                          ENUMERATED {intraSlot, interSlot}
OPTIONAL,      -- Need S
        frequencyHoppingOffsetLists               SEQUENCE (SIZE (1..4)) OF INTEGER
(1.. maxNrofPhysicalResourceBlocks-1)


OPTIONAL,      -- Need M
        resourceAllocation                        ENUMERATED
{ resourceAllocationType0, resourceAllocationType1, dynamicSwitch},
        pusch-TimeDomainAllocationList            SetupRelease { PUSCH-
TimeDomainResourceAllocationList }                OPTIONAL,      -- Need M
```

```
        pusch-AggregationFactor              ENUMERATED { n2, n4, n8 }
OPTIONAL,      -- Need S
        mcs-Table                            ENUMERATED {qam256,
qam64LowSE}                                        OPTIONAL,      -- Need S
        mcs-TableTransformPrecoder           ENUMERATED {qam256, qam64LowSE}
OPTIONAL,      -- Need S
        transformPrecoder                    ENUMERATED {enabled, disabled}
OPTIONAL,      -- Need S
        codebookSubset                       ENUMERATED
{fullyAndPartialAndNonCoherent, partialAndNonCoherent,nonCoherent}


OPTIONAL, -- Cond codebookBased
        maxRank                              INTEGER (1..4)
OPTIONAL, -- Cond codebookBased
        rbg-Size                             ENUMERATED { config2}
OPTIONAL, -- Need S
        uci-OnPUSCH                          SetupRelease { UCI-OnPUSCH}
OPTIONAL, -- Need M
        tp-pi2BPSK                           ENUMERATED {enabled}
OPTIONAL, -- Need S

        ...

}
```

Hereinafter, codebook-based PUSCH transmission will be described. The codebook-based PUSCH transmission may be dynamically scheduled through DCI format 0_0 or 0_1, and may be semi-statically operated by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI may refer to the SRS resource corresponding to the SRI, among SRS resources transmitted prior to the PDCCH including the corresponding SRI. The TPMI and the transmission rank may be given through "precoding information and number of layers" (a field inside DCI) or configured through precodingAndNumberOfLayers (upper signaling). The TPMI may be used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI may be used to indicate a precoder to be applied in an SRS resource indicated through the SRI.

The precoder to be used for PUSCH transmission may be selected from an uplink codebook having the same number of antenna ports as the value of nrofSRS-Ports inside SRS-Config (upper signaling). In connection with codebook-based PUSCH transmission, the UE may determine a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "nonCoherent",based on UE capability reported by the UE to the base station. If the UE reported "partialAndNonCoherent" as UE capability, the UE may not expect that the value of codebookSubset (upper signaling) will be configured as "fullyAndPartialAndNonCoherent". In addition, if the UE reported "nonCoherent" as UE capability, UE may not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as"partialAndNonCoherent".

The UE may have one SRS resource set configured therefor, wherein the value of usage inside SRS-ResourceSet (upper signaling)is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE may transmit, to the base station, one or multiple SRS resources included in the SRS resource set wherein the value of usage is configured as "codebook" according to upper signaling, and the base station may select one from the SRS resources transmitted by the UE and indicate the UE to be able to transmit a PUSCH by using transmission beam information of the corresponding SRS resource. In connection with the codebook-based PUSCH transmission, the SRI may be used as information for selecting the index of one SRS resource, and may be included in DCI. Additionally, the base station may add information indicating the rank and TPMI to be used by the UE for PUSCH transmission to the DCI. Using the SRS resource indicated by the SRI, the UE may apply, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be semi-statically operated by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE may not expect that information regarding the precoder for SRS transmission will be updated.

If the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI may not indicate cross carrier or cross BWP scheduling. In addition, if the value of SRS request indicates the existence of a NZP CSI-RS, the NZP CSI-RS may be located in the slot used to transmit the PDCCH including the SRS request field. In this case, TCI states configured for the scheduled subcarrier may not be configured as QCL-TypeD.

If there is a periodic or semi-persistent SRS resource set configured, the connected NZP CSI-RS may be indicated through associated CSI-RS inside SRS-ResourceSet (upper signaling). With regard to non-codebook-based transmission, the UE may not expect that spatialRelationInfo which is upper signaling regarding the SRS resource and associated CSI-RS inside SRS-ResourceSet (upper signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE may occupy the same RB. The UE may configure one SRS port for each SRS resource. There may be only one configured SRS resource set wherein the value of usage inside SRS-ResourceSet (upper signaling) is"nonCodebook", and a maximum of four SRS resources may be configured for non-codebook-based PUSCH transmission.

The base station may transmit one NZP-CSI-RS connected to the SRS resource set to the UE, and the UE may calculate the precoder to be used when transmitting one or multiple SRS resources inside the corresponding SRS resource set, based on the result of measurement when the corresponding NZP-CSI-RS is received. The UE may apply the calculated precoder when transmitting, to the base station, one or multiple SRS resources inside the SRS resource set wherein the configured usage is "nonCodebook", and the base station may select one or multiple SRS resources from the received one or multiple SRS resources. In connection with the non-codebook-based PUSCH transmission, the SRI may indicate an index that may express one SRS resource or a combination of multiple SRS resources. The number of SRS resources indicated by the SRI transmitted by the base station may be the number of transmission layers of the PUSCH, and the UE may transmit the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. Accordingly, the PUSCH preparation procedure time is defined in NR. The PUSCH preparation procedure time of the UE may follow Equation 2 given below.

[Equation 2]

$$T_{proc,2} = \max(( N_2 + d_{2,1} + d_2)( 2048 + 144 ) \kappa 2^{-\mu} T_c + T_{ext} + T_{switch}, d_{2,2} )$$

Each parameter in $T_{proc,2}$ described above in Equation 2 may have the following meaning.

- $N_2$: the number of symbols determined according to UE processing capability 1 or 2, based on the UE's capability, and numerology $\mu$. $N_2$ may have a value in Table 22 if UE processing capability 1 is reported according to the UE's capability report. $N_2$ may have a value in Table 23 if UE processing capability 2 is reported, and if availability of UE processing capability 2 is configured through higher layer signaling.

[Table 22]

| $\mu$ | PUSCH preparation time $N_2$ [symbols] |
|---|---|
| 0 | 10 |
| 1 | 12 |
| 2 | 23 |
| 3 | 36 |

[Table 23]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 if all resource elements of the first OFDM symbol of PUSCH transmission include DM-RSs, and to be 1 otherwise.
- $\kappa$: 64
- $\mu$: may follow a value, among $\mu_{DL}$ and $\mu_{UL}$, which makes $T_{proc,2}$ larger. $\mu_{DL}$ may refer to the numerology of a downlink used to transmit a PDCCH including DCI that schedules a PUSCH, and $\mu_{UL}$ may refer to the numerology of an uplink used to transmit a PUSCH.
- $T_c$: has $1/(\Delta f_{max} \cdot N_f)$, $\Delta f_{max} = 480 \cdot 10^3 Hz$, $N_f = 4096$..
- $d_{2,2}$: follows a BWP switching time if DCI that schedules a PUSCH indicates BWP switching, and has 0 otherwise.
- $d_2$: if OFDM symbols overlap temporally between a PUSCH having a high priority index and a PUCCH having a low priority index, the $d_2$ value of the PUSCH having a high priority index is used. Otherwise, $d_2$ is 0.
- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.
- $T_{switch}$: if an uplink switching spacing has been triggered, $T_{switch}$ is assumed to be the switching spacing time. Otherwise, $T_{switch}$ is assumed to be 0.

The base station and the UE determine that the PUSCH preparation procedure time is insufficient if the first symbol of a PUSCH starts earlier than the first uplink symbol in which a CP starts after Tproc,2 from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[Regarding CA/DC]

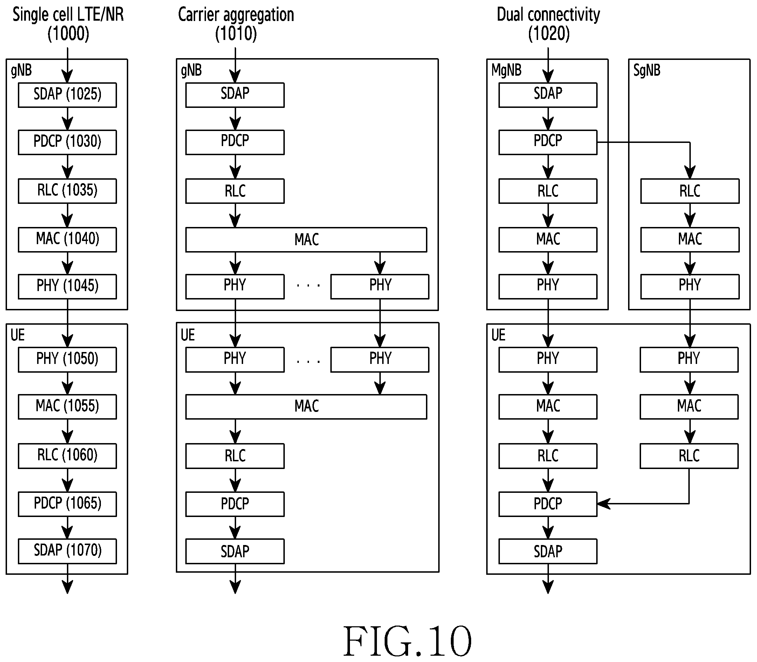

FIG. 10 illustrates radio protocol structures of a base station and a UE in single cell, carrier aggregation, and dual connectivity situations according to an embodiment of the disclosure.

Referring to FIG. 10, the radio protocol of a next-generation mobile communication system includes an NR service data adaptation protocol (SDAP) 1025 or 1070, an NR packet data convergence protocol (PDCP) 1030 or 1065, an NR radio link control (RLC) 1035or 1060, and an NR medium access controls (MAC) 1040 or 1055 on each of UE and NR base station sides.

The main functions of the NR SDAP 1025 or 1070 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 1030 or 1065 may include some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above-mentioned functions, the reordering of the NR PDCP device may refer to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC 1035 or 1060 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection

- Protocol error detection
- RLC SDU discard
- RLC re-establishment

In the above-mentioned functions, the in-sequence delivery of the NR RLC device may refer to a function of successively delivering RLC SDUs received from the lower layer to the upper layer. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number(SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery function of the NR RLC device may refer to a function of instantly delivering RLC SDUs received from the lower layer to the upper layer regardless of the order, may include a function of reassembling and delivering multiple RLC SDUs received, into which one original RLC SDU has been segmented, and may include a function of storing the RLC SN or PDCP SN of received RLC PDUs, and recording RLC PDUs lost as a result of reordering.

The NR MAC 1040 or 1055 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 1045 or 1050may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as 1000. Contrarily, in case that the base station transmits data to the UE, based on carrier aggregation(CA) which uses multiple carriers in a single TRP, the base station and the UE may use a protocol structure which has a single structure up to the RLC, but multiplexes the PHY layer through a MAC layer, such as 1010. As an example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as 1020.

Referring to the above description relating to the PDCCH and beam configuration,PDCCH repetitive transmission is not supported in current Rel-15 and Rel-16 NR,and it may be thus difficult to achieve required reliability in a scenario requiring high reliability, such as URLLC. The disclosure may improve the PDCCH reception reliability of a UE by providing a PDCCH repetitive transmission method through multiple transmission points (TRPs). Specific methods thereof will be described hereinafter through the embodiments below.

Hereinafter, embodiments of the disclosure will be described in detail in conjunction with the accompanying drawings. The contents of the disclosure may be applied to FDD and TDD systems. As used herein, upper signaling (or upper layer signaling") is a method for transferring signals from a base station to a UE by using a downlink data channel of a physical layer, or from the UE to the base station by using an uplink data channel of the physical layer, and may also be referred to as "RRC signaling", "PDCP signaling", or "MAC control element (MAC CE)".

As used herein, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, embodiments of the disclosure will be described in detail in conjunction with the accompanying drawings. In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description of embodiments of the disclosure, 5G systems are described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.

- MIB
- SIB or SIB X (X=1, 2,...)
- RRC
- MAC CE

In addition, L1 signaling may refer to signaling corresponding to at least one signaling method among signaling methods using the following physical layer channels or signaling, or a combination of one or more thereof.

- Physical downlink control channel (PDCCH)
- DCI
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

[UL transmission cancellation indication]

A UL transmission cancellation indication may be an indication for canceling uplink channels or signals previously scheduled for a UE. A process in which the UE monitors and applies the UL transmission cancellation indication may be as follows.

The UE may receive, from the base station, configuration information for monitoring the UL transmission cancellation indication through an upper layer signal (RRC signal).

The UE may confirm (identify or determine) a time-frequency domain in which uplink channels and signals should be canceled, based on the UL transmission cancellation indication. Hereinafter, the UE's confirmation may refer to the same operation as identifying or determining.

The UE may confirm whether there are pre-scheduled uplink channels and signals overlapping the time-frequency domain described above. In case that the UE has pre-scheduled uplink channels and signals overlapping the time-frequency domain, transmission of the uplink channels and signals may be cancelled. In this case, (i) only the overlapping part may be canceled in transmission, and the non-overlapping part may be transmitted, or (ii) transmission may be canceled only in the overlapping OFDM symbols, and transmission may be performed in the non-overlapping OFDM symbols, or (iii) any slightly overlapping uplink channels and signals may be canceled in transmission. In addition, even if (iv) overlapped, uplink transmission may not be canceled.

The above (i), (ii), (iii), and (iv) may be applied differently according to the type of uplink channels and signals. For example, in the case of a PUSCH, (iii) may be applied. In the case of a sounding reference signal (SRS), (ii) may be applied. In the case of a PUCCH, (iv) may be applied. Exceptionally, in the case of uplink channels and signals scheduled after the UL transmission cancellation indication is received, (iv) may be applied.

The above (i), (ii), (iii), and (iv) above may be applied differently according to the priority of uplink channels and signals. The priority may include "0" and "1". "0" may correspond to a low priority, and "1" may correspond to a high priority. The UL transmission cancellation indication may be applied restrictively only to channels and signals corresponding to the low priority. For example, in the case of a PUSCH corresponding to the low priority, (iii) may be applied, and in the case of a PUSCH corresponding to the high priority, (iv) may be applied.

The disclosure relates to a method in which a UE supporting SBFD receives a UL transmission cancellation indication, and determines a time-frequency domain in which uplink channels and signals are to be canceled, based on the received UL transmission cancellation indication.

Prior to describing the disclosure, a method for receiving a UL transmission cancellation indication and a method for determining a time-frequency domain to be canceled are as follows.

The UE may confirm a PDCCH monitoring occasion for transmitting a UL transmission cancellation indication from the base station. The PDCCH monitoring occasion may be confirmed based on the search space associated with the UL transmission cancellation indication. A search space may be a common search space that one or multiple UEs may monitor in common. For example, the UE may monitor a DCI format including a UL transmission cancellation indication in a PDCCH monitoring occasion. For reference, the DCI format may have a CRC scrambled by a specific RNTI. The specific RNTI may be UE-specifically configured (UE-specific upper layer signal). The specific RNTI may be configured to have the same value for multiple UEs. The multiple UEs may monitor a DCI format with the same specific RNTI in the PDCCH monitoring occasion.

The UE may determine a reference uplink resource corresponding to each PDCCH monitoring occasion. A symbol coming after a predetermined number of symbols from a PDCCH monitoring occasion may be deemed the starting symbol of a reference uplink resource.

The predetermined number of symbols may be determined as follows.

- A predetermined number of symbols may include a processing time required for the UE to cancel the uplink channel. The processing time may be denoted as $T_{proc,2}$, and the processing time may be determined based on the time ($T_{proc,2}$) required to prepare the PDSCH.
- The predetermined number of symbols may include a symbol number configured by the base station. The base station may configure the symbol number for the UE through an upper layer signal. UE may determine the predetermined number of symbols, based on the symbol number.
- The predetermined number of symbols may include a processing time required for the UE to cancel the uplink channel and a symbol number configured by the base station. For example, the predetermined number of symbols may be determined based on the processing time + the time corresponding to the symbol number configured by the base station.

The reference uplink resource may include as many symbols as $T_{CI}$. $T_{CI}$ may be determined as follows:

- $T_{CI}$ may be a value configured by the base station. $T_{CI}$ may be a value regarding the number of symbols, and may be one of 2, 4, 7, and 14. The configured $T_{CI}$ value may be used when the monitoring periodicity of a PDCCH for transmitting a UL transmission cancellation indication to the UE is one slot, and when two or more PDCCH monitoring occasions are configured in one slot.

- $T_{CI}$ may be equal to the symbol number included in the monitoring periodicity of a PDCCH for transmitting a UL transmission cancellation indication. The $T_{CI}$ value may be used as the symbol number included in the monitoring periodicity when the monitoring periodicity of a PDCCH for transmitting a UL transmission cancellation indication to the UE is larger than the same, or when one PDCCH monitoring occasion is configured within one slot.

The UE may determine as many symbols as $T_{CI}$ to be included in the reference uplink resource from the starting symbol of the reference uplink resource. For example, the UE may successively select as many symbols as $T_{CI}$ from the starting symbol of the reference uplink resource, but may exclude specific symbols from the selection of as many symbols as $T_{CI}$.

The specific symbols may be symbols used to receive SS/PBCH blocks and symbols determined as downlink symbols according to TDD configurations. For example, when the UE determines as many symbols as $T_{CI}$ to be included in the reference uplink resource from the starting symbol of the reference uplink resource, symbols used to receive SS/PBCH blocks and symbols determined as downlink symbols according to TDD configurations may be excluded.

For reference, the TDD configurations may include cell-common TDD configurations, and UE-specific TDD configurations may be excluded. More specifically, the UE may be configured by the base station regarding whether symbols are downlink symbols, uplink symbols, or flexible symbols, based on cell-common TDD configurations. Symbols determined as downlink symbols or uplink symbols according to cell-common TDD configurations cannot be configured in a different direction by UE-specific TDD configurations. Symbols determined as flexible symbols according to cell-common TDD configurations may be changed to uplink symbols or downlink symbols by UE-specific TDD configurations.

The cell-common TDD configurations may be transmitted to the UE from the base station through a system information block (SIB). All UEs in a cell may receive cell-common TDD configurations (e.g., identical configuration information). UE-specific TDD configurations may be configured by RRC signals transmitted to the UE. Other UEs in the cell may receive different UE-specific TDD configurations.

Resource blocks (RBs) that are included in the reference uplink resource may be configured for the UE by the base station. From the above-described configurations, the UE may acquire the index ($N_{RFR}^{start}$) of the starting RB of the reference uplink resource and the number ($B_{CI}$) of consecutive RBs included in the reference uplink resource. The index of the starting RB may be represented as $N_{RFR}^{start}=O_{carrier} + RB_{start}$, and the number of consecutive RBs included in the reference uplink resource may be represented as $B_{CI}=L_{RB}$. In this regard, $RB_{start}$ and $L_{RB}$ may be indicated by a resource indication value (RIV) scheme. In addition, $O_{carrier}$ may be an offset value configured for the UE by the base station and, in the frequency domain, Point A (the lowest subcarrier of common RB0) and the lowest subcarrier available may thus be expressed by the number of RBs. For reference, the subcarrier spacing corresponding to $O_{carrier}$ may be equal to the subcarrier spacing of the active downlink BWP used to receive the DCI format including the UL transmission cancellation indication.

As described above, the UE may confirm symbols and RBs included in the reference uplink resource. The number of included symbols may be $T_{CI}$, and the number of included RBs may be $B_{CI}$. The UE may distinguish symbols included in the reference uplink resource into as many partitions as $G_{CI}$ in the time domain. The value of $G_{CI}$ may configured by the base station. In addition, the UE may partition the RBs included in the reference uplink resource into as many partitions as $N_{BI}$.

The reference uplink resource may be divided into $G_{CI}$ in the time domain and $N_{BI}$ in the frequency domain. Therefore, the reference uplink resource may be divided into $G_{CI}*N_{BI}$ in the time-frequency domain. The UL transmission cancellation indication may include bits indicating as many time-frequency partitions as $G_{CI}*N_{BI}$, respectively. That is, the UL transmission cancellation indication may include $N_{CI}$ bits, and $N_{CI} = G_{CI} * N_{BI}$ may hold.

The base station may configure at least two values among $N_{CI}$, $G_{CI}$, and $N_{BI}$ for the UE. The remaining one unconfigured may be derived through Equation $N_{CI} = G_{CI} * N_{BI}$. For example, the base station may configure $N_{CI}$ and $G_{CI}$ for the UE. In this case, $N_{CI}$ may be calculated through $N_{CI}/G_{CI}$. For reference, $N_{CI}$ may be a multiple of $G_{CI}$, and may be a multiple of $N_{BI}$.

Each of $N_{CI}$ bits included in the UL transmission cancellation indication may have a corresponding partition. If the above-described bit is "1", the UE may confirm that the corresponding partition is a time-frequency resource for which uplink transmission is to be canceled.

According to the above description of the UL transmission cancellation indication, multiple UEs that have received the UL transmission cancellation indication may all acquire the same information. That is, all UEs may confirm the same time-frequency resource to be canceled. Therefore, the UL transmission cancellation indication described above may be referred to as group-common signaling or group-common DCI or group-common PDCCH, which is transmitted to multiple UEs at the same time.

The base station may transmit multiple UL transmission cancelation indications to multiple UEs through a single DCI format. The DCI format may include first bits which are UL transmission cancellation indications for first multiple UEs, and may include second bits which are UL transmission cancellation indications for second multiple UEs. There may be ambiguity in determining which bits among the bits included in the DCI format correspond to the uplink transmission cancellation for the UE. Therefore, the base station may inform the UE of the location of the starting bit of the UL transmission cancellation indication among bits included in the DCI format. The UE may acquire $N_{CI}$ bits from the bit location and confirm the same as a UL transmission cancellation indication.

[SBFD]

Meanwhile, a subband non-overlapping full duplex (SBFD) is being discussed as a new duplex scheme based on NR in 3GPP. SBFD is a technology wherein a portion of a downlink resource is utilized as an uplink resource in a TDD band (spectrum) at a frequency of 6GHz or lower or at 6GHz or higher such that uplink transmission corresponding to the increased uplink resource is received from the UE, thereby expanding the UE's uplink coverage, and feedback regarding downlink transmission is received from the UE by using the expanded uplink resource, thereby reducing the feedback delay. In the disclosure, the UE may receive information regarding whether SBFD is supported from the base station. A UE that is able to perform uplink transmission in a part of a downlink resource may be referred to or referenced as an SBFD-capable UE for the sake of convenience. The following schemes may be considered to define the SBFD scheme in specifications and to confirm that SBFD is supported in a specific cell (or frequency/frequency band).

First scheme. Another frame structure type (e.g., frame structure type 2) may be introduced to define SBFD in addition to the frame structure type of the legacy unpaired spectrum (or time division duplex (TDD)) or paired spectrum (or frequency division duplex (FDD)). Frame structure type 2 may also be defined as being supported at a specific frequency or frequency band. Alternatively, the base station may indicate, to the UE, whether SBFD is supported through system information. The SBFD-capable UE may receive system information including whether SBFD support is supported, thereby confirming whether SBFD is supported in a specific cell (or frequency/frequency band).

Second scheme. Whether SBFD is additionally supported at a specific frequency or frequency band of the legacy unpaired spectrum (or TDD) may be indicated without defining a new frame structure type. In the second scheme, whether SBFD is additionally supported at a specific frequency or frequency band of the legacy unpaired spectrum may also be defined. Alternatively, the base station may indicate, to the UE, whether SBFD is supported through system information. The SBFD-capable UE may receive system information including whether SBFD is supported, thereby confirming whether SBFD is supported in a specific cell (or frequency/frequency band).

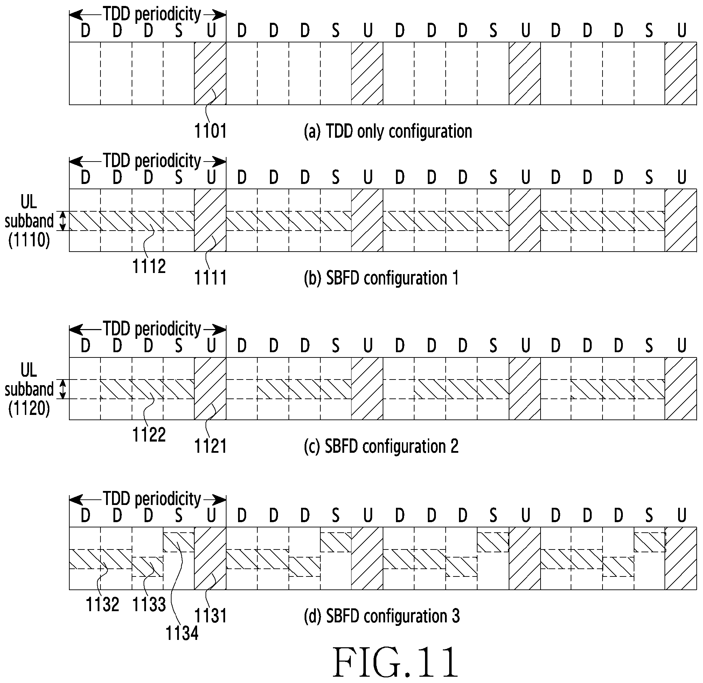

In the first and second schemes, information regarding whether SBFD is supported may also include information (e.g., the SBFD resource configuration information in FIG. 11, which will be described later) indicating whether SBFD is supported indirectly by configuring a part of a downlink resource as an uplink resource, in addition to configurations regarding TDD uplink-downlink (UL-DL) resource configuration information indicating TDD's downlink slot (or symbol) resource and uplink slot (or symbol) resource. Alternatively, in the first and second schemes, the information regarding whether SBFD is supported may directly indicate whether SBFD is supported. The information regarding whether SBFD is supported may include at least one of the above-described pieces of information.

In the disclosure, the SBFD-capable UE may receive a synchronization signal block during initial cell access for accessing a cell (or base station) to acquire cell synchronization. The process of acquiring cell synchronization may be the same for the SBFD-capable UE and the legacy TDD UE. Thereafter, the SBFD-capable UE may confirm whether the cell supports SBFD through a process of MIB acquisition or SIB acquisition or random access process.

The system information for transmitting information regarding whether SBFD is supported may be system information transmitted separately from system information for a UE (e.g., legacy TDD UE) supporting a different version of specifications within the cell. The SBFD-capable UE may confirm whether SBFD is supported by acquiring all or part of the system information transmitted separately from the system information for the legacy TDD UE. In case that the SBFD-capable UE acquires only system information for the legacy TDD UE or acquires system information regarding no SBFD support, the cell (or base station) may confirm that the UE supports only TDD.

In case that information regarding whether SBFD is supported is included in system information for a UE supporting a different version of specifications (e.g., a legacy TDD UE), the information regarding whether SBFD is supported may be inserted at the end so as not to affect system information acquisition by the legacy TDD UE. In case that the SBFD-capable UE fails to acquire the information regarding whether SBFD is supported, which is inserted at the end, or acquires information indicating no SBFD support, the cell (or base station) may confirm that the SBFD-capable UE supports only TDD.

In case that information regarding whether SBFD is supported is included in system information for a UE supporting a different version of specifications (e.g., a legacy TDD UE), the information regarding whether SBFD is supported may be transmitted through a separate PDSCH so as not to affect system information acquisition by the legacy TDD UE. For example, a UE supporting no SBFD may receive a first SIB (or SIB1) including legacy TDD-related system information through a first PDSCH. An SBFD-supporting UE may receive a first SIB (or SIB) including legacy TDD-related system information through the first PDSCH, and may receive a second SIB including SBFD-related system information through the second PDSCH.

The first PDSCH and the second PDSCH may be scheduled by the first PDCCH and the second PDCCH. The cyclic redundancy code (CRC) of the first PDCCH and the second PDCCH may be scrambled by the same RNTI (e.g., SI-RNTI). Th search space for monitoring the second PDCCH may be acquired from the system information of the first PDSCH. In case that the search space for monitoring the second PDCCH is not acquired from the system information of the first PDSCH (i.e., if the system information of the first PDSCH does not include information regarding the search space), the second PDCCH may be received in a search space identical to the search space of the first PDCCH.

In case that the SBFD-capable UE confirms that the cell (or base station) supports only TDD, the SBFD-capable UE may perform a random access procedure and data/control signal transmission and/or reception in the same manner as the legacy TDD UE.

The base station may configure a separate random access resource for each of the legacy TDD UE or SBFD-capable UE (for example, an SBFD-capable UE supporting full-duplex communication and an SBFD-capable UE supporting half-duplex communication), and may transmit, to the SBFD-capable UE, random access resource-related configuration information (e.g., control information or configuration information indicating time-frequency resources that may be used for a PRACH) through system information. The system information for transmitting random access resource-related information may be transmitted separately from system information for UEs (e.g., legacy TDD UEs) supporting a different version of specifications in the cell.

By configuring separate random access resources for the TDD UE supporting a different version of specifications and the SBFD-capable UE, the base station may be able to distinguish whether the TDD UE supporting a different version of specifications performs random access or the SBFD-capable UE performs random access. For example, a random access resource separately configured for the SBFD-capable UE may be confirmed to be a downlink time resource by the legacy TDD UE. The SBFD-capable UE may perform random access through an uplink resource (or a separate random access resource) configured in a partial frequency of the downlink time resource. The base station may confirm that the UE that has attempted random access in the uplink resource is an SBFD-capable UE.

Alternatively, the base station may not configure a separate random access resource for the SBFD-capable UE, and may configure a common random access resource for all UEs in the cell. In this case, configuration information regarding the random access resource may be transmitted to all UEs in the cell through system information. Upon receiving the system information, the SBFD-capable UE may perform random access to the random access resource. Thereafter, the SBFD-capable UE may complete the random access procedure and proceed to an RRC-connected mode for data transmission/reception with the cell. After the RRC-connected mode, the SBFD-capable UE may receive an upper layer or physical layer signal that may enable confirmation that some frequency resources of downlink time resources are configured as uplink resources from the base station, and may perform an SBFD operation (for example, transmitting uplink signals in uplink resources).

In case that the SBFD-capable UE confirms that the cell supports SBFD, the SBFD-capable UE may notify the base station that the UE attempting to access is a SBFD-capable UE by transmitting, to the base station, capability information including at least one from among whether the UE supports SBFD, whether the UE supports full-duplex communication or half-duplex communication, and the number of transmission or reception antennas that the UE has (or supports). Alternatively, in case that support for half-duplex communication is an essential implementation for the SBFD-capable UE, the capability information may not include information regarding whether half-duplex communication is supported. The SBFD-capable UE may report the capability information to the base station through a random access process, may report the same to the base station after completion of the random access process, or may report the same to the base station after entering an RRC-connected mode for data transmission/reception with the cell.

The SBFD-capable UE may support half-duplex communication in which only uplink transmission or downlink reception is performed at a time, like the legacy TDD UE. The SBFD-capable UE may also support full-duplex communication in which uplink transmission and downlink reception are both performed at a time. Therefore, whether half-duplex communication or full-duplex communication is supported may be reported by the SBFD-capable UE to the base station through a capability report. After the reporting, the base station may configure the SBFD-capable UE so as to transmit/receive using half-duplex communication or using full-duplex communication. In the case that the SBFD-capable UE reports capability regarding half-duplex communication to the base station, a switching gap for changing the RF between transmission and reception may be required in case of operating in FDD or TDD, because no duplexer generally exists.

FIG. 11 is a diagram illustrating an example in which SBFD is operated in a TDD band of a wireless communication system according to an embodiment of the disclosure.

Referring to FIG. 11, a case in which TDD is operated in a specific frequency band according to the TDD only configuration 1151 is illustrated. In a cell operating TDD, a base station may transmit and/or receive a signal including data/control information with a legacy TDD UE or an SBFD-capable UE in a downlink slot (or symbol), an uplink slot (or symbol) 1101, or a flexible slot (or symbol), based on configurations regarding TDD UL-DL resource configuration information indicating TDD's downlink slot (or symbol) resource and uplink slot (or symbol) resource.

It may be assumed that a DDDSU slot format is configured according to TDD UL-DL resource configuration information in FIG. 11. "D" may refer to a slot configured entirely by downlink symbols. "U" may refer to a slot configured entirely by uplink symbols. "S" may refer to a slot including downlink symbols or uplink symbols or including flexible symbols (a slot that is neither "D" nor "U".) In FIG. 11 of the disclosure, S may be assumed for convenience to be configured by 12 downlink symbols and 2 flexible symbols. In addition, the DDDSU slot format may be repeated according to the TDD UL-DL resource configuration information. That is, the repetition periodicity of the TDD configuration may be five slots (for example, 5ms in the case of a 15kHz SCS, 2.5ms in the case of a 30kHz SCS, and so on).

Next, referring to FIG. 11, in SBFD configuration 1 1152, SBFD configuration 2 1153, and SBFD configuration 3 1154, a case in which SBFD is operated together with TDD in a specific frequency band is illustrated.

Referring to SBFD configuration 1 1152 in FIG. 11, a partial band of the frequency of the cell may be configured as a frequency band 1110 for the UE such that uplink transmission is possible. The frequency band in which uplink transmission is possible may be referred to as an uplink subband (UL subband). The UL subband may be applied to all symbols of all slots. The UE may transmit uplink channels or signals scheduled for all symbols 1112 within the UL subband to the base station. However, the UE is not able to transmit uplink channels or signals to the base station in a band other than the UL subband.

Referring to SBFD configuration 2 1153 in FIG. 11, a partial band of the frequency of a cell may be configured as a frequency band 1120 for the UE such that uplink transmission is possible, and a time domain in which the frequency band is activated may be configured. The frequency band in which uplink transmission is possible may be referred to as a UL subband. In SBFD configuration 2 1153 of FIG. 11, the UL subband is deactivated in the first slot, and may be activated in the remaining slots. Therefore, the UE may transmit uplink channels or signals to the base station in the UL subband 1122 of remaining slots. Therefore, although the UL subband is activated with regard to each slot in FIG. 11, this is only an example, and activation of the UL subband may be configured with regard to each symbol.

Referring to SBFD configuration 3 1154 in FIG. 11, time-frequency resources may be configured for the UE such that uplink transmission is possible. One or more time-frequency resources may be configured for the UE as time-frequency resources such that uplink transmission is possible. For example, partial frequency bands 1132 of the first and second slots may be configured as a time-frequency resources in which uplink transmission is possible. In addition, partial frequency bands 1133 of the third slot and partial frequency bands 1134 of the fourth slot may be configured as time-frequency resources in which uplink transmission is possible.

In the following description, time-frequency resources in which uplink transmission is possible in downlink symbols or slots may be referred to as SBFD resources. In addition, symbols for which a UL subband is configured in downlink symbols may be referred to as SBFD symbols. In addition, time-frequency resources in which downlink reception is possible in uplink symbols or slots may be referred to as SBFD resources. In addition, symbols for which a DL subband is configured in uplink symbols may be referred to as SBFD symbols.

For the sake of convenience, bands in which downlink channels or signals can be received, excluding uplink subbands, may be expressed as downlink subbands in the disclosure. A UE may configure a maximum of one uplink subband for one symbol, and may configure a maximum of two downlink subbands. For example, one of {uplink subband, downlink subband}, {downlink subband, uplink subband}, and {first downlink subband, uplink subband, second downlink subband} may be configured for the UE in the frequency domain.

## RB index

In the disclosure, one of the following three types may be used as the index of RBs in the frequency domain.

1) Common RB index

The common RB index may be numbered from 0 to increase as the frequency increases. The UE may assume that a sub-carrier matching "point A" is sub-carrier 0. Twelve subcarriers may be grouped in ascending order of frequency from a subcarrier, and a common RB index may be assigned thereto. For example, in case that the subcarrier index is $k$, a value corresponding to $floor(k/12)$ may be the common RB index of the RB to which the subcarrier belongs.

The common RB index may be determined according to point A. Since point A is configured commonly for all UEs in the cell, all UEs may have the same common RB index.

2) BWP-specific RB index

A downlink BWP for receiving a channel or signal and an uplink BWP for transmitting the same may be configured for a UE. The UE may assume that the index of the lowest RB of the BWP is 0, as a specific BWP RB index. For example, by using a common RB index, the location of the starting RB of a BWP may be given as $N_{BWP}^{start}$ . That is, the RB corresponding to the common RB index $N_{BWP}^{start}$ may be indexed as specific BWP RB index 0. For example, $n_{CRB} = n_{PRB} + N_{BWP}^{start}$ , wherein $n_{CRB}$ may be a common RB index, and $n_{PRB}$ may be a specific BWP RB index.

3) Subband-specific RB index

An uplink subband may be configured for a downlink symbol. Conversely, a downlink subband may be configured for an uplink symbol. In connection with the subband-specific RB index, the index of the lowest RB among RBs included in a subband may be assumed to be 0.

For example, by using a common RB index, the location of the starting RB of a subband may be given as $N_{CRB-sub}^{start}$ . That is, the value of $N_{CRB-sub}^{start}$ may be configured for the UE through an upper layer signal from the base station. An RB corresponding to common RB index $N_{CRB-sub}^{start}$ may be given subband-specific RB index 0. For example, $n_{CRB} = n_{sub} + N_{CRB-sub}^{start}$ , wherein $n_{CRB}$ may be a common RB index, and $n_{sub}$ may be a subband-specific RB index. For reference, a subband having the starting RB location configured by the value of $N_{CRB-sub}^{start}$ may be applied to all BWPs of the UE. That is, a subband having the starting RB location configured by the value of $N_{CRB-sub}^{start}$ may not be BWP-specific.

In an embodiment, the location of the starting RB of a subband may be given as $N_{PRB-sub}^{start}$ by using a BWP-specific RB index. That is, the value of $N_{PRB-sub}^{start}$ may be configured for the UE through an upper layer signal from the base station. The $N_{PRB-sub}^{start}$ value may be configured for a specific BWP. An RB corresponding to BWP-specific RB index $N_{PRB-sub}^{start}$ may be given subband-specific RB index 0. For example, $n_{PRB} = n_{sub} + N_{PRB-sub}^{start}$ , wherein $n_{PRB}$ may be a BWP-specific RB index, and $n_{sub}$ may be a subband-specific RB index.

Through the above-described methods and examples, the subband-specific RB index $n_{sub}$ may be represented as follows:

$$n_{sub} = n_{CRB} - N_{CRB-sub}^{start} = n_{PRB} + (N_{BWP}^{start} - N_{CRB-sub}^{start})$$

$$n_{sub} = n_{PRB} - N_{PRB-sub}^{start} = n_{CRB} - (N_{BWP}^{start} + N_{PRB-sub}^{start})$$

Therefore, $N_{CRB-sub}^{start} = N_{BWP}^{start} + N_{PRB-sub}^{start}$, $N_{PRB-sub}^{start} = N_{CRB-sub}^{start} - N_{BWP}^{start}$ .

Embodiment 1. Determining reference uplink resources in consideration of TDD configurations and SBFD UL subbands

In an embodiment of the disclosure, the UE may determine a reference uplink resource, based on the configuration of the SBFD UL subband. As used herein, the reference uplink resource refers to a time-frequency resource that may be indicated by a received UL transmission cancellation indication.

The UE may receive TDD configuration information from the base station. Based on the received TDD configuration information, the UE may confirm which symbol type among a downlink symbol, an uplink symbol, or a flexible symbol each OFDM symbol is. In addition, the TDD configuration information may include a TDD periodicity. The UE may repeatedly determine the symbol type for each TDD periodicity.

The UE may receive SBFD configuration information from the base station. The received SBFD configuration information may include information regarding an SBFD UL subband configuration. The SBFD UL subband may be configured in a downlink symbol or a flexible symbol determined according to TDD configuration information. The SBFD UL subband may have the following features within a TDD periodicity.

The SBFD UL subband may be configured by a set of consecutive OFDM symbols in a TDD periodicity. That is, the OFDM symbols included in the SBFD UL subband may all be consecutive in the time domain. If the SBFD UL subband includes noncontinuous OFDM symbols in the time domain, this may be considered as an incorrect configuration.

The SBFD UL subband may include consecutive RBs in the frequency domain. For example, all RBs included in the SBFD UL subband may be consecutive in the frequency domain. If the SBFD UL subband includes RBs that are noncontinuous in the frequency domain, this may be considered as an incorrect configuration.

The SBFD configuration information may be divided into common SBFD configuration information and UE-specific SBFD configuration information. The common SBFD configuration information may be SBFD configuration information applied commonly by all UEs in the cell. The common SBFD configuration information may be transmitted to the UE through a system information block (SIB) or cell-common RRC signal. The UE-specific SBFD configuration information may be separate SBFD configuration information configured for each UE by the base station. For example, different UEs may receive different pieces of UE-specific SBFD configuration information. The UE-specific SBFD configuration information may be transmitted through a UE-specific RRC signal.

The UE may determine a reference uplink resource, based on the TDD configuration information and the SBFD configuration information. A method for determining a reference uplink resource may be as follows.

The UE may determine a reference uplink resource corresponding to each PDCCH monitoring occasion. The UE may confirm that a symbol following a predetermined number of symbols after a PDCCH monitoring occasion is the starting symbol of a reference uplink resource.

The predetermined number of symbols may be determined as follows:

- The predetermined number of symbols may include a processing time required by the UE to cancel the uplink channel. The processing time may be represented as $T'_{proc,2}$, and may be calculated based on the time ($T_{proc,2}$) required to prepare the PDSCH.
- The predetermined number of symbols may include a symbol number configured by the base station. The base station may configure the symbol number for the UE through an upper layer signal. The UE may determine the predetermined number of symbols, based on the symbol number configured by the base station.
- The predetermined number of symbols may include the processing time required for the UE to cancel the uplink channel and the symbol number configured by the base station. That is, the predetermined number of symbols may be obtained based on the sum of the processing time and the time corresponding to the symbol number of configured by the base station.

The reference uplink resource may include as many symbols as $T_{CI}$. In this regard, $T_{CI}$ may be determined as follows:

- $T_{CI}$ may be a value configured by the base station. $T_{CI}$ may be a value regarding the number of symbols and may have one of values 2, 4, 7, and 14. In case that the monitoring periodicity of a PDCCH for transmitting a UL transmission cancellation indication to the UE is one slot, and in case that two or more PDCCH monitoring occasions are configured within one slot, the configured $T_{CI}$ value may be used.
- $T_{CI}$ may be equal to the symbol number included in the monitoring occasion of a PDCCH for transmitting a UL transmission cancellation indication. In case that the monitoring periodicity of a PDCCH for transmitting a UL transmission cancellation indication to the UE is larger than one slot, or in case that one PDCCH monitoring occasion is configured within one slot, the symbol number included in the monitoring periodicity may be calculated by using the $T_{CI}$ value.

The UE may determine $T_{CI}$ symbols to be included in a reference uplink resource from the starting symbol of the reference uplink resource. The UE may successively select $T_{CI}$ symbols from the starting symbol of the reference uplink resource, and may exclude specific symbols when selecting $T_{CI}$ symbol.

According to an embodiment of the disclosure, a specific symbol may be determined as follows. Obviously, the disclosure is not limited to the following examples.

In the first method, in case that uplink transmission is impossible in all RBs of OFDM symbols, the UE may exclude the above-described OFDM symbol(s). More specifically, the following symbols may be considered as specific symbols according to the TDD configuration and the SBFD configuration.

(i) Among downlink symbols configured according to the TDD configuration, symbols having no SBFD UL subband configured therefor

In addition, according to the configuration, even if an SBFD UL subband is configured, the UE may not be able to perform uplink transmission in some OFDM symbols. For example, in the case of symbols for which SS/PBCH reception is configured (e.g., all SS/PBCH symbols or some symbols according to the configuration), an SBFD UL subband may be configured therefor, but uplink transmission may be impossible in the SBFD UL subband. Therefore, the symbols for which SS/PBCH reception is configured (e.g., all SS/PBCH symbols or some symbols according to the configuration) may also be included in specific symbols.

(ii) Symbols for which SS/PBCH reception is configured (all SS/PBCH symbols or some symbols according to a configuration)

Some symbols among the SS/PBCH symbols may be configured by the base station for the UE as follows.

In the first method, the UE may consider SS/PBCH symbols as symbols in which uplink transmission is always impossible. In other words, all SS/PBCH symbols received by the UE may be included in (ii).

In the second method, the UE may determine whether to include the same in (ii) according to the type of SS/PBCH symbols. SS/PBCH symbols may be divided into cell-defining (CD) SS/PBCH symbols, which may be used for initial access to a cell, and non-cell-defining (NCD) SS/PBCH symbols, which are not. In the case of CD SS/PBCH symbols, uplink transmission may be configured to be impossible to prevent performance degradation during initial cell access. Therefore, CD SS/PBCH symbols may be included in (ii), but an NCD SS/PBCH symbols may not be included in (ii).

In the third method, the UE may determine whether to include the same in (ii) according to the type of the TDD symbols for which SS/PBCH reception is configured. The SS/PBCH symbols may be received in a downlink symbol or a flexible symbol according to TDD configurations. SS/PBCH symbols received in the downlink symbols may be included in (ii), but SS/PBCH symbols received in the flexible symbols may not be included in (ii). That is, although SS/PBCH symbols received in the downlink symbol have an SBFD UL subband configured therefor, uplink transmission in the SBFD UL subband may be impossible. However, if SS/PBCH symbols received in the flexible symbols have an SBFD UL subband configured therefor, uplink transmission in the SBFD UL subband may be possible. This is because uplink transmission is possible in flexible symbols.

In the fourth method, the UE may configure the index of an SS/PBCH block which cannot be used for uplink reception, among SS/PBCH block indexes. An SS/PBCH block within an SS/PBCH reception periodicity may have a unique index. The unique index may start from 0, and may increase sequentially in time order. For example, the first SS/PBCH block within an SS/PBCH reception periodicity may have an index of 0, the second SS/PBCH block may have an index of 1, and the $n^{th}$ SS/PBCH block may have an index of n-1. The UE may have a bitmap configured therefor by the base station. Each bit of the bitmap may correspond to an SS/PBCH block. For example, the first bit of the bitmap may correspond to an SS/PBCH block having an index of 0, the second bit may correspond to an SS/PBCH block having an index of 1, and the $n^{th}$ bit may correspond to an SS/PBCH block having an index of n-1. In case that the bit is "0", even if the SS/PBCH corresponding to the bit has an SBFD UL subband configured for the UE, uplink transmission may be impossible in the SBFD UL subband.

In the fifth method, the UE may have time interval information configured regarding symbols in which uplink transmission is impossible, even if an SBFD UL subband is configured, among symbols in which an SS/PBCH is received. The UE may have a time interval configured by the base station. As a first example, the time interval may include a periodicity, an offset, and a length. The UE may confirm the starting point of a time interval, based on the periodicity and the offset. In addition, the length of the time interval may be determined from the length. In case that there is an SS/PBCH reception symbol in the time interval, the UE may confirm that uplink transmission is not possible in the symbol. The periodicity, offset, and length may be configured using an ms unit or a slot unit or a symbol unit. As a second example, the time interval may be configured by a periodicity a bitmap within the periodicity. The UE may apply a bitmap for each periodicity. Each bit of the bitmap may have corresponding symbol(s). If a bit of the bitmap is "0" and if an SS/PBCH symbol exists in the corresponding symbols, uplink transmission may not be possible. The length of the bitmap may be equal to the number of symbols or the number of slots or the number of SS/PBCH blocks in the periodicity.

In the second method, in case that uplink transmission is impossible in RBs included in uplink reference resources of OFDM symbols, the UE may exclude the OFDM symbols. The RBs included in uplink reference resources may be considered to have been confirmed in advance. According to the SBFD UL subband configuration, the UE may be able to perform uplink transmission in some frequencies (subbands) among the frequencies. Therefore, the UE may determine a specific symbol, based on whether RBs included in uplink reference resources overlap the SBFD UL subband.

(iii) Among downlink symbols configured according to the TDD configuration, symbols having no SBFD UL subband configured therefor

(iv) Among downlink symbols configured according to the TDD configuration, symbols which have an SBFD UL subband configured therefor, but RBs of which included in a reference uplink resource include no SBFD UL subband

(iii) may be the same as the first method described above. For example, among downlink symbols, uplink transmission may not be possible for all RBs of symbols in which no SBFD UL subband is configured. Therefore, the above-described symbols (e.g., symbols having no SBFD UL subband configured therefor among downlink symbols) may be included in specific symbols.

(iv) is a case in which an SBFD UL subband is configured in some RBs of a downlink symbol, but RBs described above do not overlap with RBs included in the reference uplink resource, and the UE may include the above-described symbol (e.g., among downlink symbols, symbols which have an SBFD UL subband configured therefor, but RBs of which included in a reference uplink resource include no SBFD UL subband) in specific symbols.

Separately from (iii) and (iv), symbol(s) in the first method above may also be included in specific symbols in the second method in the case of (ii).

For reference, in the above description, the TDD configuration may include a cell-common TDD configuration and may exclude a UE-specific TDD configuration. In addition, in the description above, the SBFD configuration may include only a cell-common SBFD configuration, and a UE-specific SBFD configuration may be excluded.

For reference, only UE-specific SBFD configuration may be configured for the UE, without a separate cell-common SBFD configuration for the UE. In this case, the UE may use the UE-specific SBFD configuration described above.

For reference, the base station may configure the SBFD configuration to be used in the above description for the UE. The UE may confirm reference uplink resources, based on the above-described SBFD configuration information.

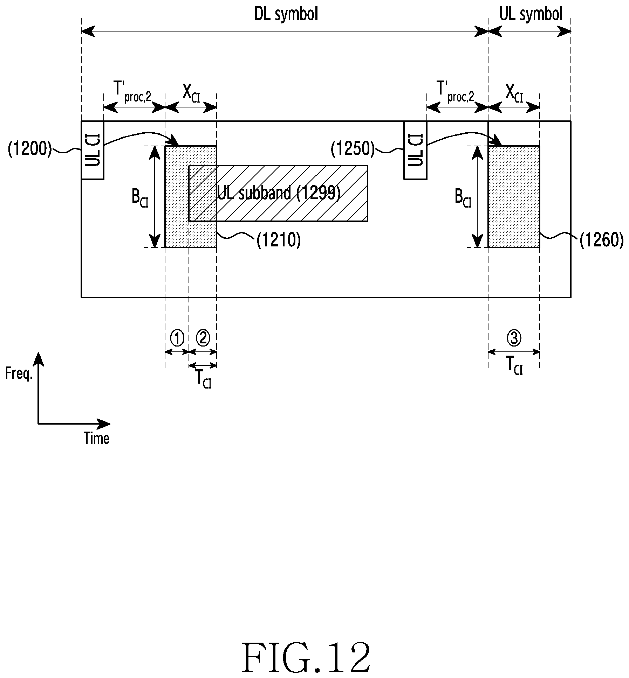

FIG. 12 is a diagram illustrating a method for determining a reference uplink resource according to an embodiment of the disclosure.

According to a TDD configuration, OFDM symbols may be divided into DL symbols and UL symbols. For reference, flexible symbols (omitted in FIG. 12) may be configured, but the flexible symbols may be processed as the same as the UL symbols.

Referring to FIG. 12, the UE may have an SBFD UL subband 1299 configured therefor. The SBFD UL subband 1299 may be configured for a DL symbol and may be configured in a part of a frequency band. The UE may monitor a UL transmission cancellation indication (UL CI). In FIG. 12, the UL CI may be received in two PDCCH monitoring occasions 1200 and 1250. The UL CI monitored in the first PDCCH monitoring occasion 1200 may confirm the first reference uplink resource 1210 corresponding thereto. The UL CI monitored in the second PDCCH monitoring occasion 1250 may confirm the second reference uplink resource 1260 corresponding thereto.

The reference uplink resource may include as many symbols as $X_{CI}$ in the time domain and as many RBs as $B_{CI}$ in the frequency domain. For reference, specific symbols among the $X_{CI}$ symbols may be excluded from the reference uplink resource. FIG. 12 is a diagram illustrating reference uplink resources 1210 and 1260 before exclusion.

According to the first method of the disclosure, the UE may exclude specific symbols among as many symbols as XCI included in the first reference uplink resource 1210. According to the first method of the disclosure, the UE may consider that, among (i) downlink symbols configured according to the TDD configuration, symbols having no SBFD UL subband configured therefor are specific symbols. The symbols corresponding to ① in FIG. 12 may be symbols having no SBFD UL subband configured (symbols included in (i)). Therefore, symbols corresponding to ① may be excluded from the first reference uplink resource 1210. However, symbols corresponding to ② may have an SBFD UL subband configured therefor. Therefore, the symbols may be included in the first reference uplink resource 1210. As a result, the symbols included in the first reference uplink resource may correspond to ②. Therefore, the number of symbols ($T_{CI}$) included in the first reference uplink resource, except for specific symbols, may be equal to the number of symbols corresponding to ②. For example, $T_{CI} < X_{CI}$.

According to the first method of the disclosure, the UE may exclude specific symbols among as many symbols as $T_{CI}$ included in the second reference uplink resource 1260. According to the first method of the disclosure, the UE may consider that, (i) among downlink symbols configured according to the TDD configuration, symbols having no SBFD UL configured therefor are specific symbols. Symbols included in the second reference uplink resource (symbols corresponding to ③) may all be uplink symbols according to the TDD configuration. Therefore, these symbols may not be excluded from the second reference uplink resource. Therefore, the number ($T_{CI}$) of symbols included in the second reference uplink resource, except for specific symbols, may be identical to the number of symbols corresponding to ③. For example, $T_{CI} = X_{CI}$.

According to the second method of the disclosure, the UE may exclude specific symbols among $X_{CI}$ symbols included in the first reference uplink resource 1210. According to the second method of the disclosure, the UE may consider that (iii) among downlink symbols configured according to TDD configurations, symbols having no SBFD UL configured therefor and (iv) among downlink symbols configured according to TDD configurations, symbols which have an SBFD UL subband configured therefor, but RBs of which included in a reference uplink resource include no SBFD UL subband, are specific symbols. The symbols corresponding to ① in FIG. 12 may be symbols having no SBFD UL configured therefor (symbols included in (iii)). Therefore, the symbols corresponding to ① may be excluded from the first reference uplink resource 1210. However, symbols corresponding to ② may have an SBFD UL subband configured therefor. Therefore, the above-described symbols may be included in the first reference uplink resource 1210. As a result, the symbols included in the first reference uplink resource may correspond to ②. For reference, in FIG. 12, the SBFD UL subband and the reference frequency resource overlap in the frequency domain and, accordingly, there may be no symbol corresponding to (iv). Therefore, the number ($T_{CI}$) of symbols included in the first reference uplink resource, except for specific symbols, may be identical to the number of symbols corresponding to ②. For example, $T_{CI}<X_{CI}$.

According to the second method of the disclosure, the UE may exclude specific symbols among $T_{CI}$ symbols included in the second reference uplink resource 1260. According to the second method of the disclosure, the UE may consider that (iii) among downlink symbols configured according to TDD configurations, symbols having no SBFD UL configured therefor and (iv) among downlink symbols configured according to TDD configurations, symbols which have an SBFD UL subband configured therefor, but RBs of which included in a reference uplink resource include no SBFD UL subband, are specific symbols. The symbols included in the second reference uplink resource (symbols corresponding to ③) may all be uplink symbols according to TDD configurations. Therefore, the symbols may not be excluded from the second reference uplink resource. Therefore, the number ($T_{CI}$) of symbols included in the second reference uplink resource, except for specific symbols, may be identical to the number of symbols corresponding to ③. For example, $T_{CI}=X_{CI}$.

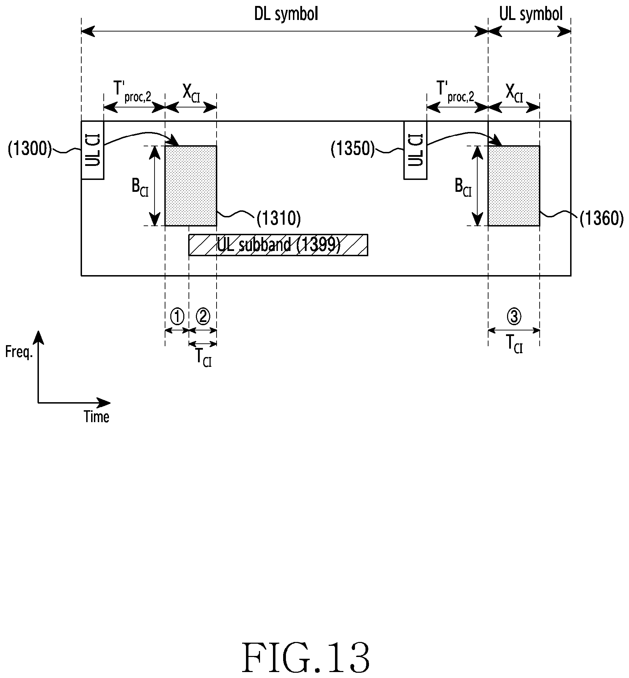

FIG. 13 is a diagram illustrating a method for determining a reference uplink resource according to an embodiment of the disclosure.

According to TDD configurations, OFDM symbols may be divided into DL symbols and UL symbols. For reference, flexible symbols (not illustrated in FIG. 13) may be configured, and the flexible symbols may be processed in the same manner as the UL symbols.

Referring to FIG. 13, the UE may have an SBFD UL subband 1399 configured therefor. The SBFD UL subband 1399 may be configured for a DL symbol and may be configured for a part of a frequency band. Unlike FIG. 12, in FIG. 13, the frequency band (as many RBs as BCI) of the SBFD UL subband does not overlap with the SBFD UL subband 1399.

The UE may monitor a UL transmission cancellation indication (UL CI). In FIG. 13, the UL CI may be received in two PDCCH monitoring occasions 1300 and 1350. The UL CI monitored in the first PDCCH monitoring occasion 1300 may confirm the corresponding first reference uplink resource 1310. The UL CI monitored in the second PDCCH monitoring occasion 1350 may confirm the corresponding second reference uplink resource 1360.

The reference uplink resource may include as many symbols as $T_{CI}$ in the time domain and as many RBs as $B_{CI}$ in the frequency domain. For reference, specific symbols among the $T_{CI}$ symbols may be excluded from the reference uplink resource. FIG. 13 is a diagram illustrating a reference uplink resource before exclusion.

According to the first method of the disclosure, the UE may exclude specific symbols among as many symbols as $X_{CI}$ included in the first reference uplink resource 1310. According to the first method of the disclosure, the UE may consider that (i) among downlink symbols configured according to TDD configurations, symbols having no SBFD UL subband configured therefor are specific symbols. Symbols corresponding to ① in FIG. 13 may be symbols having no SBFD UL subband configured therefor (symbols included in (i)). Therefore, symbols corresponding to ① may be excluded from the first reference uplink resource 1210. However, the symbols corresponding to ② may have an SBFD UL configured therefor. Therefore, the above-described symbols (e.g., symbols corresponding to ②) may be included in the first reference uplink resource 1210. As a result, the symbols included in the first reference uplink resource may correspond to ②. Therefore, the number ($T_{CI}$) of symbols included in the first reference uplink resource, except for specific symbols, may be identical to the number of symbols corresponding to ②. For example, $T_{CI}<X_{CI}$.

According to the first method of the disclosure, the UE may exclude specific symbols among as many symbols as $T_{CI}$ included in the second reference uplink resource 1360. According to the first method of the disclosure, the UE may consider that (i) among downlink symbols configured according to TDD configurations, symbols having no SBFD UL subband configured therefor are specific symbols. Symbols included in the second reference uplink resource (e.g., symbols corresponding to ③) may all be uplink symbols according to TDD configurations. Therefore, these symbols (for example, symbols corresponding to ③) may not be excluded from the second reference uplink resource. Therefore, the number ($T_{CI}$) of symbols included in the second reference uplink resource, excluding the specific symbols, may be identical to the number of symbols corresponding to ③. For example, $T_{CI}=X_{CI}$.

According to the second method of the disclosure, the UE may exclude specific symbols among as many symbols as $X_{CI}$ included in the first reference uplink resource 1310. The UE may consider that (iii) among downlink symbols configured according to TDD configurations, symbols having no SBFD UL configured therefor and (iv) among downlink symbols configured according to TDD configurations, symbols which have an SBFD UL subband configured therefor, but RBs of which included in a reference uplink resource include no SBFD UL subband, are specific symbols. Symbols corresponding to ① in FIG. 13 may be symbols having no SBFD UL subband configured therefor (symbols included in (iii)). Therefore, symbols corresponding to ① may be excluded from the first reference uplink resource 1310. The symbols corresponding to ② have an SBFD UL subband configured therefor, but the SBFD UL subband may not overlap with the frequency of the reference uplink resource. Therefore, the symbols corresponding to ② (the symbols included in (iii)) may be excluded from the first reference uplink resource 1310. As a result, there may be no symbols included in the first reference uplink resource. For example, $T_{CI}=0$.

According to the second method of the disclosure, the UE may exclude specific symbols among $T_{CI}$ symbols included in the second reference uplink resource 1360. According to the second method of the disclosure, the UE may consider that (iii) among downlink symbols configured according to TDD configurations, symbols having no SBFD UL subband configured therefor and (iv) among downlink symbols configured according to TDD configurations, symbols which have an SBFD UL subband configured therefor, but RBs of which included in a reference uplink resource include no SBFD UL subband, are specific symbols. Symbols included in the second reference uplink resource (e.g., symbols corresponding to ③) may all be uplink symbols according to TDD configurations. Therefore, the symbols (e.g., the symbols corresponding to ③) may not be excluded from the second reference uplink resource. Therefore, the number ($T_{CI}$) of symbols included in the second reference uplink resource, except for specific symbols, may be equal to the number of symbols corresponding to ③. For example, $T_{CI}=X_{CI}$.

Referring to FIG. 12 and FIG. 13, when using the first method, the UE may determine a reference uplink resource by using time domain information of the SBFD UL subband, regardless of the frequency domain configuration of the SBFD UL subband. Therefore, when the UE uses the first method with reference to FIG. 12 and FIG. 13, the UE implementation may be facilitated. However, with reference to FIG. 13, when the first method is used, the frequency domain of the reference uplink resource may not include the SBFD UL subband, but may be included in the SBFD UL subband. Therefore, the UE may unnecessarily monitor the reference uplink resource, or unnecessary resources may be included in the reference uplink resource.

Referring to FIG. 12 and FIG. 13, when using the second method, the UE may determine a reference uplink resource in consideration of the time-frequency domain configuration of the SBFD UL subband. Therefore, when the UE uses the second method with reference to FIG. 12 and FIG. 13, the UE may avoid unnecessary monitoring of a reference uplink resource or may prevent an unnecessary resource from being included in the reference uplink resource. However, when using the second method, the UE should consider the time-frequency domain configuration of the SBFD UL subband, which may make the implementation of the UE more complicated.

<Reference Uplink Resource Frequency Domain Determination>

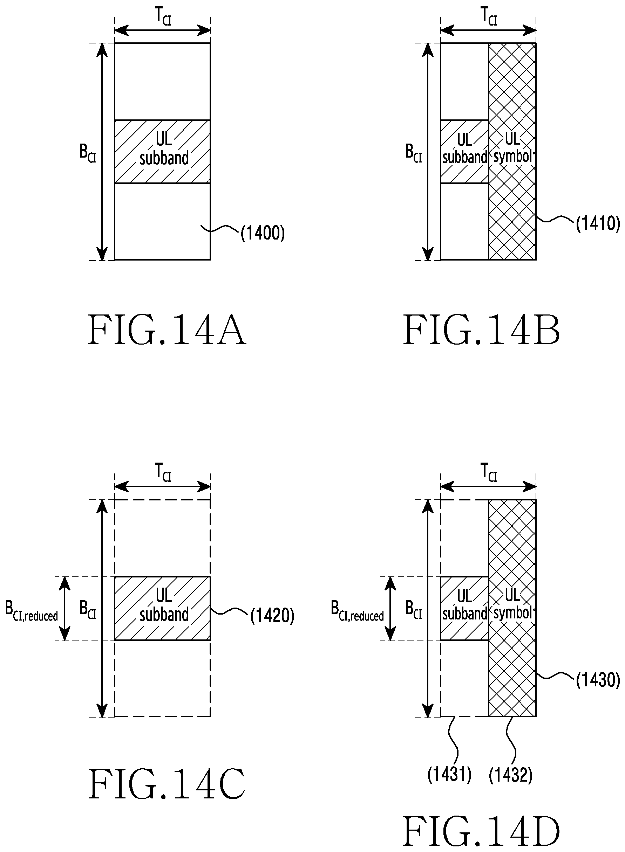

FIG. 14A to FIG. 14D illustrate a method of determining a frequency domain of a reference uplink resource according to an embodiment of the disclosure.

Referring to FIG. 14A to FIG. 14D the UE may determine a frequency domain of a reference uplink resource. As described above, the UE may configure a frequency domain of a reference uplink resource, based on an upper layer signal. The UE may configure them same, based on the index ($N_{RFR}^{start}$) of the starting RB of the reference uplink resource and the number ($B_{CI}$) of consecutive RBs included in the reference uplink resource.

However, referring to FIG. 14A and FIG. 14B, in case that only some frequency domains of the reference uplink resources overlap with frequency resources of the SBFD UL subband, uplink transmission is possible in the frequency resources overlapping with the SBFD UL subband among the reference uplink resources, and thus the frequency resources overlapping with the SBFD UL subband among the reference uplink resources may be included in the reference uplink resources. However, uplink transmission is not possible in frequency resources that do not overlap with the SBFD UL subband among the reference uplink resources, so the frequency resources that do not overlap with the SBFD UL subband among the reference uplink resources may be excluded from the reference uplink resources.

Referring to FIG. 14A, the reference uplink resource 1400 determined by the UE may include $T_{CI}$ symbols and $B_{CI}$ RBs. The reference uplink resource 1400 may include only symbols for which the SBFD UL subband is configured. In other words, the reference uplink resource 1400 may not include UL symbols or flexible symbols.

Referring to FIG. 14B, the reference uplink resource 1410 determined by the UE may include $T_{CI}$ symbols and $B_{CI}$ RBs. The reference uplink resource 1410 may include all symbols having an SBFD UL subband configured therefor and UL symbols (or flexible symbols). In other words, the reference uplink resource may include symbols having a first frequency band (symbols having an SBFD UL subband configured therefor) and symbol having a second frequency band (UL symbols or flexible symbols).

In the disclosure, a method for reducing the frequency domain of a reference uplink resource is disclosed. Obviously, the disclosure is not limited to the following embodiments.

In the first method, in case that all $T_{CI}$ symbols of the reference uplink resource overlap with an SBFD UL subband (e.g., in case that the same do not overlap with UL symbols or flexible symbols, see FIG. 14A), the UE may determine that only RBs overlapping with the SBFD UL subband correspond to the frequency domain of the reference uplink resource. For example, referring to FIG. 14C, among $B_{CI}$ RBs included in the reference uplink resource, only RBs overlapping with the SBFD UL subband may be considered as the reference uplink resource. For example, referring to FIG. 14C, although $B_{CI}$ RBs are configured as the reference uplink frequency domain, as many RBs as $B_{CI.reduced}$ included in the SBFD UL subband may be solely considered as reference uplink resources.

In the first method, in case that at least one of $T_{CI}$ symbols of the reference uplink resource overlaps with UL symbols or flexible symbols, the UE may determine the configured $B_{CI}$ RBs as the reference uplink resource. For example, in the case of FIG. 14B, the UE may consider that configured $B_{CI}$ RBs are included in the reference uplink resource.

Each partition (symbol set) may be divided into as many RB sets as $N_{BI}$ in the frequency domain. According to the first method, all partitions (symbol sets) may have the same number of RBs. For example, all partitions may include as many RBs as $B_{CI,reduced}$, or may include as many RBs as $B_{CI}$.

Each partition may be divided into as many RB sets as $N_{BI}$ in the following manner:

- Among $N_{BI}$ RB sets, the first $N_{BI} - X + \lfloor X/N_{BI} \rfloor * N_{BI}$ RB sets may include $\lfloor X/N_{BI} \rfloor$ RBs, and

- Among $N_{BI}$ RB sets, the remaining $X - \lfloor X/N_{BI} \rfloor * N_{BI}$ RB sets may include $\lceil X/N_{BI} \rceil$ RBs.

In this case, X may be determined according to the number of RBs included in the frequency domain of the reference uplink resource. For example, in case that only the SBFD UL subband overlaps with the reference uplink resource, $X=B_{CI,reduced}$. Otherwise, $X=B_{CI}$.

In the second method, the UE may divide $T_{CI}$ symbols included in the reference uplink resource into $G_{CI}$ partitions in the time domain, and may determine a frequency resource for each partition. In case that a partition overlaps with an SBFD UL subband (for example, if the partition does not overlap with an UL symbol or a flexible symbol), the UE may determine the frequency domain of the partition to include only RBs overlapping with the SBFD UL subband. In case that a single partition includes at least one UL symbol or flexible symbol, the frequency of the partition may include $B_{CI}$ RBs according to configurations. Therefore, the frequency domain of each partition may differ according to the configuration of the SBFD UL subband.

Referring to FIG. 14D, the reference uplink resource 1430 may be divided into $G_{CI}$ =2 partitions in the time domain. The first partition 1431 may include an SBFD UL subband, and the second partition 1432 may include only UL symbols. Therefore, in the case of the first partition 1431, since all symbols are SBFD UL subband symbols, the UE may confirm $B_{CI,reduced}$ RBs overlapping with the SBFD UL subband, instead of the configured $B_{CI}$ RBs, in the frequency domain. The second partition 1432 includes UL symbols, and the UE may thus confirm configured $B_{CI}$ RBs in the frequency domain.

The first partition and the second partition may be divided into $N_{BI}$ RB sets in the frequency domain. According to the second method, each partition may have a different number of RBs, and may thus be divided into $N_{BI}$ RB sets in different manners. The first partition includes $B_{CI,reduced}$ RBs and may thus be divided into $N_{BI}$ RB sets as follows:

- Among $N_{BI}$ RB sets, the first $N_{BI} - B_{CI,reduced} + \lfloor B_{CI,reduced}/N_{BI} \rfloor * N_{BI}$ RB sets may include

$\lfloor B_{CI,reduced}/N_{BI} \rfloor$ RBs, and

- Among $N_{BI}$ RB sets, the remaining $B_{CI,reduced} - \lfloor B_{CI,reduced}/N_{BI} \rfloor * N_{BI}$ RB sets may include

$\lceil B_{CI,reduced}/N_{BI} \rceil$ RBs.

The second partition includes $B_{CI}$ RBs and may thus be divided into *NBI RB* sets as follows:

Among $N_{BI}$ RB sets, the first $N_{BI} - B_{CI} + \lfloor B_{CI}/N_{BI} \rfloor * N_{BI}$ RB sets may include $\lfloor B_{CI}/N_{BI} \rfloor$ RBs, and

Among $N_{BI}$ RB sets, the remaining $B_{CI} - \lfloor B_{CI}/N_{BI} \rfloor * N_{BI}$ RB sets may include $\lceil B_{CI}/N_{BI} \rceil$ RBs.

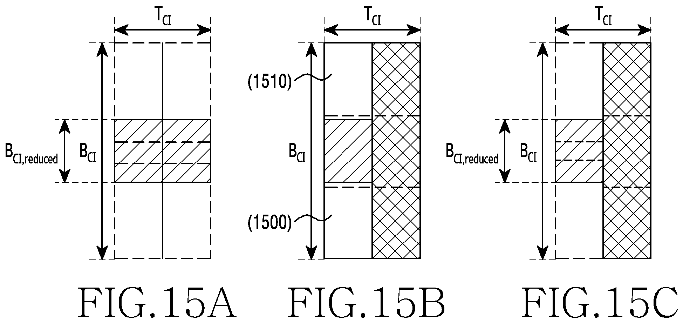

FIG. 15A to FIG. 15C are diagrams illustrating a frequency domain according to an embodiment of the disclosure.

Referring to FIG. 15A to FIG. 15C, dividing a frequency domain according to first and second methods is illustrated.

It may be assumed in FIG. 15A to FIG. 15C, that $N_{BI}$=3, $B_{CI}$=273, $B_{CI,reduced}$= 55, and $G_{CI}$=2.

Referring to FIG. 15A, in case that the reference uplink resource includes $B_{CI,reduced}$ =55 RBs, the UE may divide the reference uplink resource into $N_{BI}$=3 RB sets as follows.

- Among the three RB sets, the first $3 - 55 + \lfloor 55/3 \rfloor * 3 = 2$ RB sets may include $\lfloor 55/3 \rfloor = 18$ RBs, and

- Among the three RB sets, remaining $55 - \lfloor 55/3 \rfloor * 3 = 1$ RB sets may include $\lceil 55/3 \rceil = 19$ RBs.

Referring to FIG. 15B, according to the first method, in case that the reference uplink resource includes $B_{CI}$= 273 RBs, the UE may divide the reference uplink resource into 3 RB sets as follows.

Among the three RB sets, the first three RB sets may include 91 RBs, and
Among the three RB sets, the remaining 0 RB set may include 91 RBs.

Referring to FIG. 15C, according to the second method, in case that the first partition of the reference uplink resource includes $B_{CI.reduced}$=55 RBs and the second partition includes $B_{CI}$=273 RBs, the UE may divide the reference uplink resource into $N_{BI}$=3 RB sets as follows.

In the case of the first partition,

Among the three RB sets, the first $3 - 55 + \lfloor 55/3 \rfloor * 3 = 2$ RB sets may include $\lfloor 55/3 \rfloor = 18$ RBs, and

- Among the three RB sets, the remaining $55 - \lfloor 55/3 \rfloor * 3 = 1$ RB set may include $\lceil 55/3 \rceil = 19$ RBs.

In the case of the second partition,

- Among the three RB sets, the first 3 RB sets may include 91 RBs, and
- Among the three RB sets, the remaining 0 RB set may include 91 RBs.

Therefore, according to the second method, different partitions may be divided to include different numbers of RBs.

The reference uplink resource may be divided into $G_{CI}$=2 partitions (symbol sets) in the time domain, and each of the 2 partitions may be divided into $N_{BI}$=3 RB sets. Therefore, the UL transmission cancellation indication corresponding to the reference uplink resource may be $N_{CI}$=$G_{CI}$*$N_{BI}$ bits.

In the following description, a time-frequency slice may refer to a time-frequency resource acquired by dividing a reference uplink resource into time-domain partitions (symbol sets), and into the frequency domain.

Referring to FIG. 15B, specific time-frequency slices 1500 and 1510 may have no corresponding SBFD UL subband or UL symbols (flexible symbols included). For example, uplink transmission may be impossible in a specific time-frequency slice. However, a bit corresponding to a specific time-frequency slice may be included in the UL transmission cancellation indication. However, unnecessary bits may be included, which may cause DCI overhead. In order to reduce the DCI overhead, the UE may exclude a bit corresponding to each time-frequency slice from the UL transmission cancellation indication. For example, in case that a time-frequency slice includes no SBFD UL subband or UL symbols (flexible symbols included), the UE may exclude the bit corresponding to the time-frequency slice from the UL transmission cancellation indication.

In an embodiment, the UE may decode DCI by assuming a bit corresponding to a time-frequency slice as a specific value (e.g., 0). Therefore, the UE may increase the DCI reception reliability by decoding a bit corresponding to a time-frequency slice by using a specific value. In addition, in case that the bit corresponding to the time-frequency slice is not a specific value (e.g., 0) but another value (e.g., 1), the UE may confirm that a wrong UL transmission cancellation indication has been received. Therefore, the UE may not perform an operation according to the UL transmission cancellation indication, but may discard the same.

<Time domain partition>

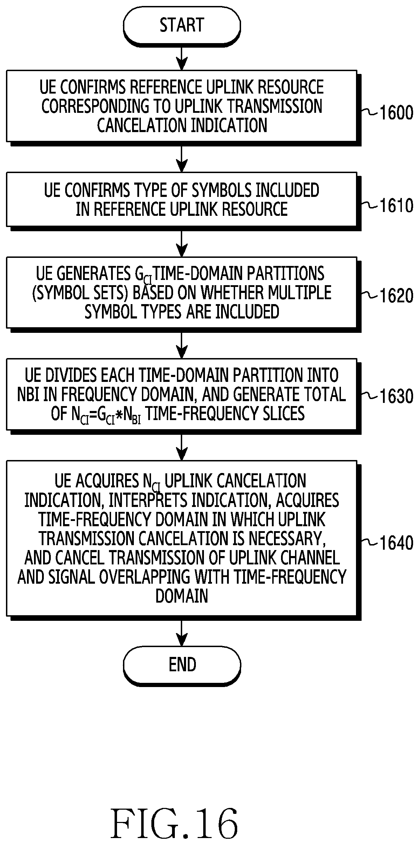

FIG. 16 is a diagram illustrating the operation sequence of a UE according to an embodiment of the disclosure.

In the first step 1600, the UE may confirm a reference uplink resource corresponding to a UL transmission cancellation indication. The reference uplink resource corresponding to the UL transmission cancellation indication may include symbols including downlink symbols having an SBFD UL subband configured therefor (that is, first symbol type) or UL symbol (flexible symbols included). The number of symbols included in the reference uplink resource may be $T_{CI}$. The number of RBs configured for the reference uplink resource may be $B_{CI}$, and the number of RBs overlapping with the SBFD UL subband, among RBs configured for the reference uplink resource, may be $B_{CI.reduced}$.

In the second step 1610, the UE may confirm the type of symbols included in the reference uplink resource. The reference uplink resource may include i) only the first symbol type, ii) only the second symbol type, or iii) both the first symbol type and the second symbol type. For reference, if the reference uplink resource does not include both the first symbol type and the second symbol type, the UE may not monitor the UL transmission cancellation indication corresponding to the reference uplink resource. Therefore, the case described above is excluded from the disclosure.

In the third step 1620, the UE may generate a time-domain partition (symbol set) based on whether multiple symbol types are included.

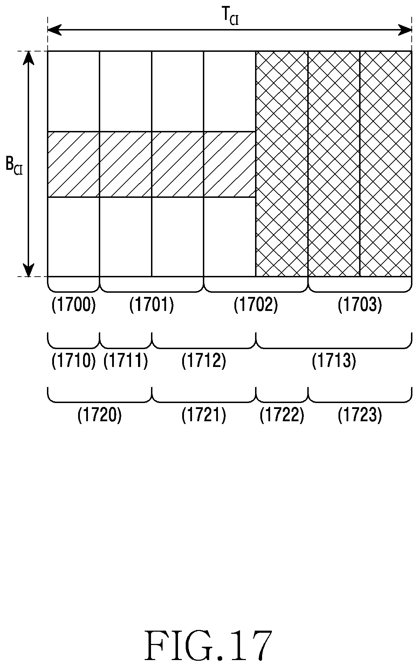

FIG. 17 illustrates the configuration of a reference uplink resource according to an embodiment of the disclosure.

Referring to FIG. 17, according to the above-described method, two types of symbols may be included in one time-domain partition (symbol set) of a reference uplink resource. The first symbol type may have uplink transmission RBs restricted to DL symbols having a UL subband configured therefor, and the second symbol type may be uplink symbols (flexible symbols included). In this case, dividing the partition in the frequency domain by using the above second method may be inefficient.

Assuming that the reference uplink resource includes $T_{CI}$=7 symbols, the first four symbols may be of the first symbol type, and the remaining three symbols may be of the second symbol type.

$G_{CI}$=4 time-domain partitions (symbol sets) may be determined as follows:

- Among $G_{CI}$=4 time-domain partitions (symbol sets), the first $G_{CI} - T_{CI} + \lfloor T_{CI}/G_{CI} \rfloor * G_{CI} = 1$ time-domain partitions (symbol sets) may include $\lfloor T_{CI}/G_{CI} \rfloor = 1$ symbols, and

- Among $G_{CI}$=4 time-domain partitions (symbol sets), the remaining $T_{CI} - \lfloor T_{CI}/G_{CI} \rfloor * G_{CI} = 3$ time-domain partitions (symbol sets) may include $\lceil T_{CI}/G_{CI} \rceil = 2$ symbols.

The four time-domain partitions (symbol sets) determined according to this scheme in FIG. 17 may be 1700, 1701, 1702, and 1703.

The first time-domain partition (symbol set) 1700 and the second time-domain partition (symbol set) 1701 may include only the first symbol type, and the fourth time-domain partition (symbol set) 1703 may include only the second symbol type. However, the third time-domain partition (symbol set) 1702 may include both the first symbol type and the second symbol type. Therefore, when dividing the third time-domain partition in the frequency domain, both symbol types may be included, which may be inefficient.

According to an embodiment of the disclosure, the UE may have only one symbol type included in one time-domain partition. For example, a method for avoiding the method in which the third time-domain partition in FIG. 17 includes both symbol types is disclosed. For reference, in case that $G_{CI}$=1 (one time-domain partition) is configured for the UE, it is unavoidable to include both symbol types. Therefore, the disclosure may be applied in the case of $G_{CI} \geq 1$ (two or more time-domain partitions).

- Among $G_{CI}$ time-domain partitions (symbol sets), the first $G_{CI} - T_{CI} + \lfloor T_{CI}/G_{CI} \rfloor * G_{CI}$ time-domain partitions (symbol sets) may include $\lfloor T_{CI}/G_{CI} \rfloor$ symbol, and

- Among $G_{CI}$ time-domain partitions (symbol sets), the remaining $T_{CI} - \lfloor T_{CI}/G_{CI} \rfloor * G_{CI}$ time-domain partitions (symbol sets) may include $\lceil T_{CI}/G_{CI} \rceil$ symbols.

In the third step 1620, in case that iii) both symbol types are included, the UE may generate time-domain partitions (symbol sets) as follows.

Among $G_{CI}$ time-domain partitions (symbol sets), the number ($G_{CI,1}$) of first time-domain partitions (symbol sets) for the first symbol type and the number ($G_{CI,2}$) of second time-domain partitions (symbol sets) for the second symbol type may be determined ($G_{CI} = G_{CI,1} + G_{CI,2}$).

- The UE may group symbols of the first symbol type in the time domain to generate $G_{CI,1}$ partitions (for example, symbol sets of the first symbol type), and may group symbols of the second symbol type in the time domain to generate $G_{CI,2}$ partitions (for example, symbol sets of the second symbol type). Symbols may be grouped in the following manner (i=1 or 2).

-- Among $G_{CI,i}$ time-domain partitions (symbol sets) for the $i$th symbol type, the first $G_{CI,i} - T_{CI,i} + \lfloor T_{CI,i}/G_{CI,i} \rfloor * G_{CI,i}$ time-domain partitions (symbol sets) may include $\lfloor T_{CI,i}/G_{CI,i} \rfloor$ symbols, and

-- Among $G_{CI,i}$ time-domain partitions (symbol sets) for the $i$th symbol type, the remaining $T_{CI,i} - \lfloor T_{CI,i}/G_{CI,i} \rfloor * G_{CI,i}$ time-domain partitions (symbol sets) may include $\lceil T_{CI,i}/G_{CI,i} \rceil$ symbols.

-- In this regard, i=1 or 2, and $T_{CI,i}$ may be the number of symbols of the $i$th symbol type ($T_{CI,1} + T_{CI,2} = T_{CI}$).

According to the disclosure, $G_{CI,1}$ and $G_{CI,2}$ may be determined as follows:
In the first method, the base station may configure one of the values $G_{CI,1}$ and $G_{CI,2}$ for the UE. For example, the UE may acquire $G_{CI,1}$ and $G_{CI,2}$ from an upper layer signal (for example, RRC signal) received from the base station. In addition, the UE may determine $G_{CI,2}$ by using the relationship $G_{CI} = G_{CI,1} + G_{CI,2}$. In addition, the UE may acquire one of the values $G_{CI,1}$ and $G_{CI,2}$ from an upper layer signal (for example, RRC signal) received from the base station. In addition, the UE may determine $G_{CI,1}$ through the relationship $G_{CI} = G_{CI,1} + G_{CI,2}$.

In the second method, $G_{CI,1}$ and $G_{CI,2}$ may be determined based on the ratio of symbols of the first symbol type and the ratio of symbols of the second symbol type, among the symbols included in the reference uplink resource.

More specifically, $G_{CI,1} = \lfloor T_{CI,1}/T_{CI} * G_{CI} \rfloor$ or $G_{CI,1} = \lceil T_{CI,1}/T_{CI} * G_{CI} \rceil$ may be determined. In addition,

$G_{CI,2}$ may be determined through the relationship $G_{CI} = G_{CI,1} + G_{CI,2}$. Additionally,

If $T_{CI,1} > T_{CI,2}$ or $T_{CI,1} \geq T_{CI,2}$, $G_{CI,1} = \lceil T_{CI,1}/T_{CI} * G_{CI} \rceil$ may hold. (That is, if there are more symbols of the first symbol type, more is allocated to the first symbol type time-domain partition). Otherwise,

$G_{CI,1} = \lfloor T_{CI,1}/T_{CI} * G_{CI} \rfloor$ may hold. In addition, $G_{CI,2} = \lceil T_{CI,2}/T_{CI} * G_{CI} \rceil$ or

$G_{CI,2} = \lfloor T_{CI,2}/T_{CI} * G_{CI} \rfloor$ may be determined. In addition, $G_{CI,1}$ may be determined through the relationship .

If $T_{CI,2} > T_{CI,1}$ or $T_{CI,2} \geq T_{CI,1}$, $G_{CI,2} = \lceil T_{CI,2}/T_{CI} * G_{CI} \rceil$ may hold. (For example, if there are more symbols of the second symbol type, more is allocated to the second symbol type time-domain partition).

Referring to FIG. 17, in case that $T_{CI}$=7 and $G_{CI}$=4, time-domain partitions according to the second method may be as follows.

The number of symbols of the first symbol type may be $T_{CI,1}$=4, and the number of symbols of the second symbol type may be $T_{CI,2}$=3.

The number of time-domain partitions of symbols of the first symbol type may be

$G_{CI,1} = \lceil T_{CI,1}/T_{CI} * G_{CI} \rceil = \lceil 4/7 * 4 \rceil = 3$, and the number of time-domain partitions of symbols of the second symbol type may be $G_{CI,2} = G_{CI} - G_{CI,1} = 1$.

The symbols of the first symbol type may be determined as time-domain partitions in the following manner:

-- Among $G_{CI,1}$=3 time-domain partitions (symbol sets) for the first symbol type, the first

$G_{CI,1} - T_{CI,1} + \lfloor T_{CI,1}/G_{CI,1} \rfloor * G_{CI,1} = 3 - 4 + \lfloor 4/3 \rfloor * 3 = 2$ time-domain partitions (symbol sets) may include

$\lfloor T_{CI,1}/G_{CI,1} \rfloor = \lfloor 4/3 \rfloor = 1$ symbols, and

-- Among $G_{CI,1}$=3 time-domain partitions (symbol sets) for the first symbol type, the remaining

$T_{CI,1} - \lfloor T_{CI,1}/G_{CI,1} \rfloor * G_{CI,1} = 4 - \lfloor 4/3 \rfloor * 3 = 1$ time-domain partitions (symbol sets) may include

$\lceil T_{CI,1}/G_{CI,1} \rceil = \lceil 4/3 \rceil = 2$ symbols.

Symbols of the second symbol type may be determined as time-domain partitions in the following manner:

-- Among $G_{CI,2} = 1$ time-domain partitions (symbol sets) for the second symbol type, the first

$G_{CI,2} - T_{CI,2} + \lfloor T_{CI,2}/G_{CI,2} \rfloor * G_{CI,2} = 1 - 3 + \lfloor 3/1 \rfloor * 1 = 1$ time-domain partitions (symbol sets) may include

$\lfloor T_{CI,2}/G_{CI,2} \rfloor = \lfloor 3/1 \rfloor = 3$ symbols, and

-- Among $G_{CI,2} = 1$ time-domain partitions (symbol sets) for the second symbol type, the remaining

$T_{CI,2} - \lfloor T_{CI,2}/G_{CI,2} \rfloor * G_{CI,2} = 3 - \lfloor 3/1 \rfloor * 1 = 0$ time-domain partitions (symbol sets) may include

$\lceil T_{CI,2}/G_{CI,2} \rceil = \lceil 3/1 \rceil = 3$ symbols.

The above-described time-domain partitions (symbol sets) may be the same as illustrated in 1710, 1711, 1712, and 1713 of FIG. 17.

It is clear from FIG. 17 that each of the four time-domain partitions 1710, 1711, 1712, and 1713 includes only one symbol type.

Referring to FIG. 17, in case that $T_{CI}$=7 and $G_{CI}$=4, time-domain partitions according to the second method may be as follows.

The number of symbols of the first symbol type may be $T_{CI,1}$=4, and the number of symbols of the second symbol type may be $T_{CI,2}$=3.

The number of time-domain partitions of symbols of the first symbol type may be

$$G_{CI,1} = \lfloor T_{CI,1}/T_{CI} * G_{CI} \rfloor = \lfloor 4/7 * 4 \rfloor = 2$$ , and the number of time-domain partitions of symbols of the second symbol type may be $G_{CI,2} = G_{CI} - G_{CI,1} = 2$.

The symbols of the first symbol type may be determined as time-domain partitions in the following manner:

-- Among $G_{CI,1}$=2 time-domain partitions (symbol sets) for the first symbol type, the first

$$G_{CI,1} - T_{CI,1} + \lceil T_{CI,1}/G_{CI,1} \rceil * G_{CI,1} = 2 - 4 + \lfloor 4/2 \rfloor * 2 = 2$$ time-domain partitions (symbol sets) may in-

clude $\lfloor T_{CI,1}/G_{CI,1} \rfloor = \lfloor 4/2 \rfloor = 2$ symbols, and

-- Among $G_{CI,1}$=2 time-domain partitions (symbol sets) for the first symbol type, the remaining

$$T_{CI,1} - \lfloor T_{CI,1}/G_{CI,1} \rfloor * G_{CI,1} = 4 - \lfloor 4/2 \rfloor * 2 = 0$$ time-domain partitions (symbol sets) may include

$$\lceil T_{CI,1}/G_{CI,1} \rceil = \lceil 4/2 \rceil = 2$$ symbols.

Symbols of the second symbol type may be determined as time-domain partitions in the following manner:

-- Among $G_{CI,2} = 2 =2$ time-domain partitions (symbol sets) for the second symbol type, the first

$$G_{CI,2} - T_{CI,2} + \lceil T_{CI,2}/G_{CI,2} \rceil * G_{CI,2} = 2 - 3 + \lfloor 3/2 \rfloor * 2 = 1$$ time-domain partitions (symbol sets) may

include $\lfloor T_{CI,2}/G_{CI,2} \rfloor = \lfloor 3/2 \rfloor = 1$ symbols, and

-- Among $G_{CI,1}$=2 time-domain partitions (symbol sets) for the second symbol type, the remaining

$$T_{CI,2} - \lfloor T_{CI,2}/G_{CI,2} \rfloor * G_{CI,2} = 3 - \lfloor 3/2 \rfloor * 2 = 1$$ time-domain partitions (symbol sets) may include

$$\lceil T_{CI,2}/G_{CI,2} \rceil = \lceil 3/2 \rceil = 2$$ symbols.

The time-domain partitions (symbol sets) described above may be the same as illustrated in 1720, 1721, 1722, and 1723 of FIG. 17.

It is clear from FIG. 17 that each of the four time-domain partitions 1720, 1721, 1722, and 1723 includes only one symbol type.

In the fourth step 1630, the UE may divide each time-domain partition into $N_{BI}$ in the frequency domain, and may generate a total of $N_{CI}=G_{CI}*N_{BI}$ time-frequency slices. In the case of time-domain partitions including only the first symbol type, the UE may divide each time-domain partition by using $B_{CI,reduced}$. In the case of time-domain partitions including only the second symbol type, the UE may divide each time-domain partition by using $B_{CI}$.

In the fifth step 1640, the UE may acquire an uplink cancellation indication of $N_{CI}$ bits corresponding to $N_{CI}=G_{CI}*N_{BI}$ time-frequency slices. The UE may interpret the uplink cancellation indication of $N_{CI}$ bits to acquire the time-frequency domain in which uplink transmission cancellation is necessary. In addition, the transmission of uplink channels and signals overlapping with the time-frequency domain in which uplink transmission cancellation is required may be canceled.

The UE may have two or more SBFD UL subbands configured for one symbol. For the sake of convenience, two SBFD UL subbands may be configured for one symbol. For reference, the case in which two SBFD DL subbands are configured for one symbol may include a case where the UE has two SBFD UL subbands (which may be hereinafter referred to as a first SBFD UL subband to a second SBFD UL subband) configured for a DL symbol by the base station. In addition, the case in which two SBFD DL subbands are configured for one symbol may include a case where the UE has an SBFD DL subband (a subband in which downlink transmission is possible) allocated for a UL symbol by the base station, one below the SBFD UL subband allocated in the frequency domain is referred to as a first SBFD UL subband, and one above the allocated SBFD UL subband is referred to as a second SBFD UL subband. The second SBFD UL subband of the first SBFD UL subband may not overlap with each other in the frequency domain. For example, the first SBFD UL subband and the second SBFD UL subband may be discontinuous in the frequency domain, and there may be a resource block in which downlink reception is possible between the two subbands.

According to an embodiment of the disclosure, when dividing a time-domain partition (symbol set) in terms of frequency to acquire time-frequency pieces, the UE may divide the same based on the configuration of two SBFD UL subbands. More specifically, when dividing the frequency into two or more to acquire time-frequency slices, the time-frequency slices may include only the resources of one SBFD UL subbands.

For example, assuming that a time-domain partition (symbol set) overlaps with a first SBFD UL subband and a first RB set in the frequency domain, and overlaps with a second SBFD UL subband and second RB sets, and in case that the UE divides the time-domain partition (symbol set) into $N_{BI}$=two, RBs corresponding to the first RB set may be included in the first time-frequency slice, and RBs corresponding to the second RB set may be included in a second time-frequency slice.

The above-described method may prevent one time-frequency domain from overlapping with two SBFD UL subbands, and further may make it possible to indicate uplink transmission cancellation within one SBFD UL subband. That is, if one time-frequency domain straddles two SBFD UL subbands, the UL transmission cancellation indication may indicate cancellation of transmission of both SBFD UL subbands at the same time. Therefore, the case in which reception cancellation of two SBFD DL subbands is indicated simultaneously may contradict the base station's intention to cancel transmission of only one SBFD UL subband.

More generally, the following may be considered.

For example, in case that a time-domain partition (symbol set) overlaps with a first SBFD UL subband at a first RB set in the frequency domain, and overlaps with a second SBFD UL subband at second RB sets, and in case that the UE divides the time-domain partition (symbol set) into $N_{BI}$, RBs corresponding to the first RB set may be included in $N_{BI,1}$ time-frequency slices, and RBs corresponding to the second RB set may be included in $N_{BI,2}$ time-frequency slices. $N_{BI,1} + N_{BI,2} = N_{BI}$ may hold.

$N_{BI,1}$ and $N_{BI,2}$ may be determined based on the number ($N_{RB,1}$) RBs included in the first RB set and the number ($N_{RB,2}$) of RBs included in the second RB set. For example, $N_{BI,1}$ and $N_{BI,2}$ may be determined as

$$N_{BI,1} = \cdot \left\lfloor N_{RB,1} / (N_{RB,1} + \cdot N_{RB,2}) \right\rfloor \quad \text{or} \quad N_{BI,1} = \cdot \left\lceil N_{RB,1} / (N_{RB,1} + \cdot N_{RB,2}) \right\rceil .$$

Embodiment 2. A method for designing a separate UL transmission cancellation indication for an SBFD UL subband

In the above embodiment 1, a reference uplink resource corresponding to a single UL transmission cancellation indication may include both the first symbol type and the second symbol type. However, there may be the following problems.

The UL transmission cancellation indication may be transmitted as a group-common signal. Therefore, the UE that receives the UL transmission cancellation indication should be able to interpret information regarding the SBFD UL subband configuration. However, some of the UEs in the cell may be UEs that do not support the SBFD operation. In this case, the UE may not determine a reference uplink resource based on the SBFD UL subband.

A method for solving the above-described problem is disclosed. However, the disclosure is not limited to the following embodiments.

First, when the base station configures information regarding the UL transmission cancellation indication for the UE, the base station may configure the type of symbols included in the reference uplink resource.

For example, the reference uplink resource may be configured to include both the first symbol type and the second symbol type. When the UE configured to include both the first symbol type and the second symbol type determines a reference uplink resource, the UE may determine the reference uplink resource to include the first symbol type and the second symbol type.

For example, the reference uplink resource may be configured to include only the first symbol type. The first symbol type may be symbols having an SBFD UL subband configured therefor (for example, symbols having an SBFD UL subband configured therefor among downlink symbols configured according to the TDD configuration). A UE configured to include only the first symbol type may include the first symbol type, but exclude the second symbol type, when determining the reference uplink resource. For example, when determining $T_{CI}$ symbols to be included in the reference uplink resource, the UE may exclude the second symbol type.

For example, only the second symbol type may be configured to be included in the reference uplink resource. The second symbol type may be uplink symbols (e.g., flexible symbols included) configured according to TDD configurations. For reference, the above-described method may be identical or similar to a method of determining a reference uplink resource without considering an SBFD UL subband.

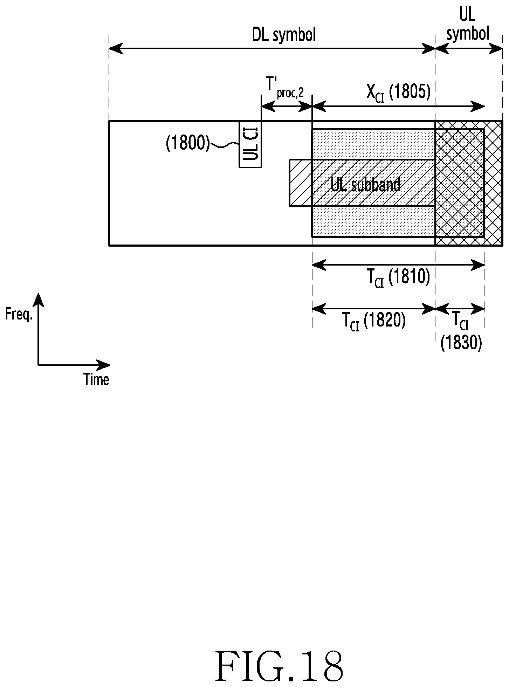

FIG. 18 is a diagram illustrating types of symbols included in a reference uplink resource according to an embodiment of the disclosure.

The UE may monitor the UL transmission cancellation indication 1800. A reference uplink resource corresponding to the UL transmission cancellation indication may be determined. To this end, the base station may configure, for the UE, information ($T'_{proc.2}$) regarding the starting symbol of the reference uplink resource and the number ($X_{CI}$) of symbols included in the reference uplink resource. The UE may confirm $X_{CI}$ symbols included in the reference uplink resource corresponding to the UL transmission cancellation indication, and may exclude specific symbols among the $X_{CI}$ symbols.

Assuming that the UE has been configured (hereinafter, configuration A) to allow both the first symbol type and the second symbol type to be included in the reference uplink resource, the UE may exclude symbols that are not of the first symbol type and the second symbol type, among $X_{CI}$ symbols included in the reference uplink resource. For example, symbols having no SBFD UL subband configured therefor among downlink symbols configured according to the TDD configuration may be excluded. The number of symbols included in the reference uplink resource, after exclusion, may be $T_{CI}$. Referring to FIG. 18, since $X_{CI}$ symbols 1805 include no symbol having no SBFD UL subband configured therefor, among downlink symbols configured according to the TDD configuration, there may be no symbols excluded from the $X_{CI}$ symbols. Therefore, $T_{CI}=X_{CI}$ may hold. The $T_{CI}$ symbols 1810 may include both the first symbol type and the second symbol type.

Assuming that the UE has been configured (hereinafter, configuration B) to allow only the first symbol type to be included in the reference uplink resource, the UE may exclude symbols that are not of the first symbol type among the $X_{CI}$ symbols included in the reference uplink resource, For example, among downlink symbols configured according to the TDD configuration, symbols having no SBFD UL subband configured therefor and uplink symbols (e.g., flexible symbols included) configured according to the TDD configuration may be excluded. The number of symbols included in the reference uplink resource, after exclusion, may be $T_{CI}$. Referring to FIG. 18, symbols of the second symbol type may be excluded from the $X_{CI}$ symbols 1805. Therefore, $T_{CI}<X_{CI}$ may hold. The $T_{CI}$ symbols 1820 may include only the first symbol type.

Assuming that the UE has been configured (hereinafter, configuration C) to allow only the second symbol type to be included in the reference uplink resource, the UE may determine the reference uplink resource, based on the TDD configuration, without considering the SBFD UL subband configuration. For example, at least one of the downlink symbols determined according to the TDD configuration, among $X_{CI}$ symbols included in the reference uplink resource, may be excluded. Therefore, even if an SBFD UL subband is configured for a downlink symbol, at least one downlink symbol determined according to the TDD configuration may be excluded. Referring to FIG. 18, $X_{CI}$ symbols 1805 may include only the second symbol type. Therefore, $T_{CI}<X_{CI}$ may hold. The $T_{CI}$ symbols 1830 may include only the second symbol type.

It may be assumed that a UE that does not support SBFD been configured (hereinafter, configuration C) to allow only the second symbol type to be included in the reference uplink resource, without a separate configuration from the base station.

For a UE supporting SBFD, one or multiple UL transmission cancellation indications may be configured.

For example, a UE supporting SBFD may have one UL transmission cancellation indication corresponding to configuration A configured therefor. In this case, the UE may acquire information regarding the cancellation of uplink channel and signal transmission in the SBFD UL subband and UL symbols (flexible symbols included) through a single transmission cancellation indication.

For example, a UE supporting SBFD may have a first UL transmission cancellation indication corresponding to configuration B configured therefor, and may have a second UL transmission cancellation indication corresponding to configuration C configured therefor. In this case, the UE may acquire information regarding cancellation of uplink channel and signal transmission in the SBFD UL subband through the first UL transmission cancellation indication, and may acquire information regarding cancellation of uplink channel and signal transmission in UL symbols (flexible symbols included) through the second UL transmission cancellation indication.

In case that multiple UL transmission cancellation indications are configured for the UE by the base station, the UE may receive the multiple UL transmission cancellation indications by using at least one of the following methods:
In the first method, the UE may have two PDCCH monitoring occasions configured for receiving multiple UL transmission cancellation indications from the base station. The UE may receive a first UL transmission cancellation indication in the first PDCCH monitoring occasion, and may receive a second UL transmission cancellation indication in the second PDCCH monitoring occasion.

The search space corresponding to the first PDCCH monitoring occasion may be different from the search space corresponding to the second PDCCH monitoring occasion. For example, the UE may monitor a PDCCH for receiving a UL transmission cancellation indication in different search spaces.

The search space corresponding to the first PDCCH monitoring occasion and the search space corresponding to the second PDCCH monitoring occasion may be identical. The first UL transmission cancellation indication and the second UL transmission cancellation indication may be received in the same search space. The PDCCH for transmitting the first UL transmission cancellation indication and the PDCCH for receiving the second UL transmission cancellation indication may be distinguished as follows.

- The first UL transmission cancellation indication and the second uplink cancellation indication may be transmitted in different DCI formats, and the DCI formats may have different lengths. For example, when the UE performs blind decoding, if the UE succeeds in decoding based on the length of the DCI format including the first UL transmission cancellation indication, the UE may confirm that the DCI format includes the first UL transmission cancellation indication. Conversely, if the UE successfully decodes based on the length of the DCI format including the second UL transmission cancellation indication, the UE may confirm that the DCI format includes the second UL transmission cancellation indication.

- The CRC of the DCI format in which the first UL transmission cancellation indication and the second uplink cancellation indication are transmitted may be scrambled by different RNTIs. For example, when the UE performs blind decoding, if the UE successfully decodes a DCI format by using an RNTI corresponding to the first UL transmission cancellation indication, the UE may confirm that the DCI format includes the first UL transmission cancellation indication. On the other hand, if the UE successfully decodes a DCI format by using the RNTI corresponding to the second UL transmission cancellation indication, the UE may determine that the DCI format includes the second UL transmission cancellation indication.

- A search space may include multiple PDCCH candidates. The PDCCH used to receive the first UL transmission cancellation indication may be different from the PDCCH candidate used to receive the second uplink cancellation indication. For example, the PDCCH used to receive the first UL transmission cancellation indication is received and the PDCCH used to receive the second UL transmission cancellation indication may have different aggregation levels. Since the aggregation levels are different, the UE may distinguish between the two PDCCHs. Alternatively, the PDCCH used to receive the first uplink transmission cancelation indication and the PDCCH used to receive the second uplink transmission cancelation indication may have the same aggregation level but different indexes. Each index may have a corresponding PDCCH candidate. The UE may distinguish the PDCCH candidate corresponding to the index, and may confirm which indication has been received by distinguishing the PDCCH candidate corresponding to the index.

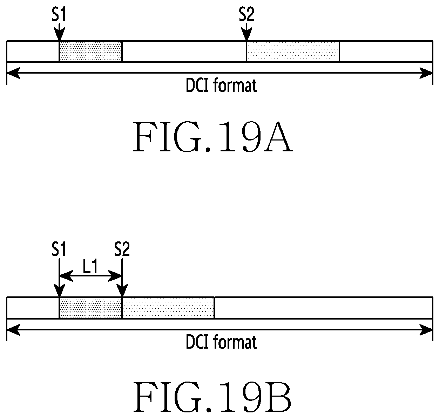

FIG. 19A and FIG. 19B are diagrams illustrating a method for receiving a UL transmission cancellation indication according to an embodiment of the disclosure.

Referring to FIG. 19A and FIG. 19B, the first UL transmission cancellation indication and the second UL transmission cancellation indication may be received through the same PDCCH (through the same DCI format) in the second method. For example, one DCI format may include a payload for the first UL transmission cancellation indication and a payload for the second UL transmission cancellation indication. The UE may confirm a first payload for the first UL transmission cancellation indication and a second payload for the second UL transmission cancellation indication in the DCI format as follows.

- The base station may configure the starting bit index of each of the first payload and the second payload for the UE. The UE may acquire the first UL transmission cancellation indication from the first payload starting bit location, and may acquire the second UL transmission cancellation indication from the second payload starting bit location. Referring to FIG. 19A, the UE may have the starting bit index S1 of the first payload and the starting bit index S2 of the second payload configured therefor.

- The base station may configure, for the UE, only the starting bit index of the first payload (or the second payload). The UE may acquire the first UL transmission cancellation indication (or the second UL transmission cancellation indication) from the starting bit location. In this case, the UE may assume that the second UL transmission cancellation indication (or the first UL transmission cancellation indication) is located immediately after the payload length of the first UL transmission cancellation indication (or the second UL transmission cancellation indication). For example, the first UL transmission cancellation indication and the second UL transmission cancellation indication may be acquired by assuming that the two indications are located consecutively. Referring to FIG. 19B, the starting bit index S1 of the first payload may be configured for the UE. The UE may assume that the second payload is located after the end of the first payload. That is, in case that the length of the first payload is L1, the starting bit index of the second payload may be S2=S1+L.

The embodiments of the disclosure described above have been described in connection with an uplink transmission canceling indication for an SBFD-supporting UE. The idea of the disclosure may be equivalently or similarly applied to a downlink reception interruption indication (downlink preemption indication) for an SBFD-supporting UE. In this case, the reference uplink resource may be replaced by a reference downlink resource and interpreted accordingly. For example, descriptions regarding reference uplink resources in the above embodiments may be replaced by descriptions regarding reference downlink resources. More specifically, the following embodiment may be considered for the downlink reception interruption indication.

The UE may have two or more SBFD DL subbands configured for one symbol. For the sake of convenience, two SBFD DL subbands may be configured for one symbol. For reference, the case in which two SBFD DL subbands are configured for one symbol may include a case where the UE has two SBFD DL subbands (which may be hereinafter referred to as a first SBFD DL subband to a second SBFD DL subband) configured for a UL symbol by the base station. In addition, the case in which two SBFD DL subbands are configured for one symbol may include a case where the UE has an SBFD UL subband (a subband in which downlink transmission is possible) allocated for a DL symbol by the base station, one below the SBFD UL subband allocated in the frequency domain is referred to as a first SBFD DL subband, and one above the allocated SBFD UL subband is referred to as a second SBFD DL subband. The second SBFD DL subband of the first SBFD DL subband may not overlap with each other in the frequency domain. For example, the first SBFD DL subband and the second SBFD DL subband may be discontinuous in the frequency domain, and there may be a resource block in which uplink reception is possible between the two subbands.

According to an embodiment of the disclosure, when dividing a time-domain partition (symbol set) in terms of frequency to acquire time-frequency slices, the UE may divide the same, based on the configuration of two SBFD DL subbands. More specifically, when dividing the same into two or more in terms of frequency to acquire time-frequency slices, each time-frequency slices may include only the resources of one SBFD DL subband.

For example, assuming that a time-domain partition (symbol set) overlaps with the first SBFD DL subband and at a first RB set in the frequency domain, and overlaps with the second SBFD DL subband at second RB sets, and in case that the UE divides the time-domain partition (symbol set) into $N_{BI}=2$, RBs corresponding to the first RB set may be included in the first time-frequency slice, and RBs corresponding to the second RB set may be included in the second time-frequency slice.

The above-described method may prevent one time-frequency domain from overlapping with two SBFD DL subbands, and may further enable downlink reception interruption indication within one SBFD DL subband. That is, if one time-frequency domain straddles two SBFD DL subbands, the downlink reception interruption indication may simultaneously indicate reception cancellation of the two SBFD DL subbands. Therefore, the case in which reception cancellation of two SBFD DL subbands is indicated simultaneously may contradict the base station's intention to cancel transmission of only one SBFD UL subband.

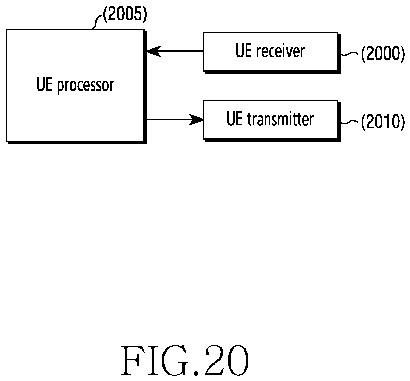

FIG. 20 illustrates a structure of a UE in a wireless communication system according to an embodiment of the disclosure.

Referring to FIG. 20, the UE may include a transceiver, which refers to a UE receiver 2000 and a UE transmitter 2010 as a whole, a memory (not illustrated), and a UE processor 2005 (or UE controller or processor). The UE transceiver 2000 and 2010, the memory, and the UE processor 2005 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver 2000 and 2010 may transmit/receive signals with base stations. The signals may include control information and data. To this end, the transceiver 2000 and 2010 may include an RF transmitter configured to up-convert and amplify the frequency of transmitted signals, an RF receiver configured to low-noise-amplify received signals and downconvert the frequency thereof, and the like. However, this is only an embodiment of the transceiver 2000and 2010, and the components of the transceiver 2000 and 2010 are not limited to the RF transmitter and the RF receiver. In addition, the transceiver 2000 and 2010 may receive signals through a radio channel, output the same to the processor 2005, and transmit signals output from the processor 2005 through the radio channel.

The memory may store programs and data necessary for the operation of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories. Furthermore, according to an embodiment, the memory may store programs for executing the above-described RB set determination methods.

Furthermore, the processor 2005 may control a series of processes so that the UE can operate according to the above-described embodiments. For example, the processor 2005 may control components of the UE to receive DCI configured in two layers so as to simultaneously receive multiple PDSCHs. The processor 2005 may include multiple processors, and the processor may perform operations of controlling the components of the UE by executing programs stored in the memory. The processor 2005 may control the UE components to perform the embodiments of the disclosure by executing the programs stored in the memory. In addition, the processor 2005 may be an application processor (AP), a communication processor (CP), a circuit, an application -specific circuit, or at least one processor.

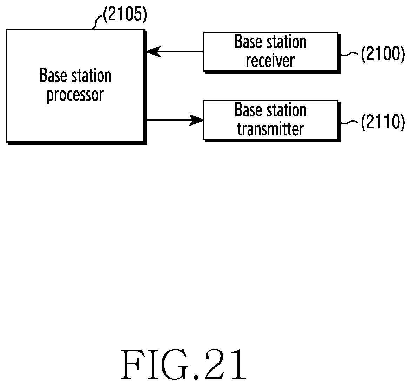

FIG. 21 illustrates a structure of a base station in a wireless communication system according to an embodiment of the disclosure.

Referring to FIG. 21, the base station may include a transceiver, which refers to a base station receiver 2100 and a base station transmitter 2110 as a whole, a memory (not illustrated), and a base station processor 2105 (or base station controller or processor). The UE transceiver 2100 and 2110, the memory, and the UE processor 2105 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver 2100 and 2110 may transmit and/or receive signals with UEs. The signals may include control information and data. To this end, the transceiver 2100 and 2110 may include an RF transmitter configured to up-convert and amplify the frequency of transmitted signals, an RF receiver configured to low-noise-amplify received signals and downconvert the frequency thereof, and the like. However, this is only an embodiment of the transceiver 2100 and 2110, and the components of the transceiver 2100 and 2110 are not limited to the RF transmitter and the RF receiver. In addition, the transceiver 2100 and 2110 may receive signals through a radio channel, output the same to the processor 2105, and transmit signals output from the processor 2105 through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories. Furthermore, according to an embodiment, the memory may store programs for executing the above-described RB set determination methods.

The processor 2105 may control a series of processes so that the base station can operate according to the above-described embodiments of the disclosure. For example, the processor 2105 may control components of the base station to configure DCI configured in two layers including allocation information regarding multiple PDSCHs and to transmit the same. The processor 2105 may include multiple processors, and the processor may perform operations of controlling the components of the base station by executing programs stored in the memory. The processor 2105 may control the components of the base station to perform the embodiments of the disclosure by executing the programs stored in the memory. In addition, the processor 2105 may be an application processor (AP), a communication processor (CP), a circuit, an application-specific circuit, or at least one processor.

It should be noted that the above-described configuration diagrams, illustrative diagrams of control/data signal transmission methods, illustrative diagrams of operation procedures, and structural diagrams as illustrated in FIG. 1 to FIG. 21 are not intended to limit the scope of protection of the disclosure. That is, all the constituent elements, entities, or operation steps shown and described in FIG. 1 to FIG. 21 should not be construed as being essential elements for the implementation of the disclosure, and even when including only some of the elements, the disclosure may be implemented without impairing the true of the disclosure.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a wireless communication system, the method comprising:

   receiving, from a base station, configuration information comprising a subband nonoverlapping full duplex (SBFD) configuration comprising information regarding an SBFD uplink subband and a time division duplex (TDD) configuration;
   receiving a DCI format comprising an uplink transmission cancellation indication from the base station; and
   identifying a reference uplink resource corresponding to the uplink transmission cancellation indication, based on the configuration information,
   wherein the uplink transmission cancellation indication comprises a first indication related to an SBFD symbol and a second indication related to a non-SBFD symbol, and
   wherein the terminal is a terminal supporting the SBFD.

2. The method of claim 1, wherein a first reference uplink resource in the SBFD symbol is canceled based on the first indication, and
   wherein a second reference uplink resource in the non-SBFD symbol is canceled based on the second indication.

3. The method of claim 1, wherein the configuration information is cell-common configuration information.

4. The method of claim 1, wherein the reference uplink resource comprises multiple partitions comprising at least one symbol, and
   wherein a reference uplink resource in a partition overlapping with the SBFD uplink subband comprises a frequency resource overlapping with the SBFD uplink subband.

5. A method performed by a base station in a wireless communication system, the method comprising:

   transmitting, to a terminal, configuration information comprising a subband nonoverlapping full duplex (SBFD) configuration comprising information regarding an SBFD uplink subband and a time division duplex (TDD) configuration; and
   transmitting a DCI format comprising an uplink transmission cancellation indication to the terminal,
   wherein a reference uplink resource corresponding to the uplink transmission cancellation indication is based on the configuration information,
   wherein the uplink transmission cancellation indication comprises a first indication related to an SBFD symbol and a second indication related to a non-SBFD symbol, and
   wherein the terminal is a terminal supporting the SBFD.

6. The method of claim 5, wherein a first reference uplink resource in the SBFD symbol is canceled based on the first indication, and
   wherein a second reference uplink resource in the non-SBFD symbol is canceled based on the second indication.

7. The method of claim 5, wherein the configuration information is cell-common configuration information.

8. The method of claim 5, wherein the reference uplink resource comprises multiple partitions comprising at least one symbol, and
wherein a reference uplink resource in a partition overlapping with the SBFD uplink subband comprises a frequency resource overlapping with the SBFD uplink subband.

9. A terminal in a wireless communication system, the terminal comprising:

a transceiver; and
at least one controller connected to the transceiver,
wherein at least one controller is configured to:

receive, from a base station, configuration information comprising a subband nonoverlapping full duplex (SBFD) configuration comprising information regarding an SBFD uplink subband and a time division duplex (TDD) configuration;
receive a DCI format comprising an uplink transmission cancellation indication from the base station; and
identify a reference uplink resource corresponding to the uplink transmission cancellation indication, based on the configuration information,
wherein the uplink transmission cancellation indication comprises a first indication related to an SBFD symbol and a second indication related to a non-SBFD symbol, and
wherein the terminal is a terminal supporting the SBFD.

10. The terminal of claim 9, wherein a first reference uplink resource in the SBFD symbol is canceled based on the first indication, and
wherein a second reference uplink resource in the non-SBFD symbol is canceled based on the second indication.

11. The terminal of claim 9, wherein the configuration information is cell-common configuration information.

12. The terminal of claim 9, wherein the reference uplink resource comprises multiple partitions comprising at least one symbol, and
wherein a reference uplink resource in a partition overlapping with the SBFD uplink subband comprises a frequency resource overlapping with the SBFD uplink subband.

13. A base station in a wireless communication system, the base station comprising:

a transceiver; and
at least one controller connected to the transceiver,
wherein at least one controller is configured to:

transmit, to a terminal, configuration information comprising a subband nonoverlapping full duplex (SBFD) configuration comprising information regarding an SBFD uplink subband and a time division duplex (TDD) configuration; and
transmit a DCI format comprising an uplink transmission cancellation indication to the terminal,
wherein a reference uplink resource corresponding to the uplink transmission cancellation indication is based on the configuration information,
wherein the uplink transmission cancellation indication comprises a first indication related to an SBFD symbol and a second indication related to a non-SBFD symbol, and
wherein the terminal is a terminal supporting the SBFD.

14. The base station of claim 13, wherein a first reference uplink resource in the SBFD symbol is canceled based on the first indication, and
wherein a second reference uplink resource in the non-SBFD symbol is canceled based on the second indication.

15. The base station of claim 13, wherein the configuration information is cell-common configuration information,

wherein the reference uplink resource comprises multiple partitions comprising at least one symbol, and
wherein a reference uplink resource in a partition overlapping with the SBFD uplink subband comprises a frequency resource overlapping with the SBFD uplink subband.

FIG.1

FIG.2

BWP#1
(301)

BWP#2
(302)

UE bandwidth
(300)

Frequency

FIG.3

FIG.4

FIG.5

FIG.6

RA type 0
(700)

715

| Bitmap |
| --- |

RA type 1
(705)

720                                    725

| Starting VRB | Length |
| --- | --- |

Both RA type
0 & 1
(710)

730                                    735

| 1 bit for RA type indication | Max{payload for RA type 0, payload for RA type 1} |
| --- | --- |

FIG.7

FIG.8

$\mu_{PDCCH}=1$

(900)

$\mu_{PDSCH}=1$

PDCCH

Slot n    Slot n+1    . . .    t

. . .

PDSCH

Slot n + K$_0$    t

$\mu_{PDCCH}=1$

(905)

$\mu_{PDSCH}=2$

PDCCH

Slot n    Slot n+1    . . .    t

PDSCH    t

$$\text{Slot} \left[ n \cdot \frac{2^{\mu_{PDSCH}}}{2^{\mu_{PDCCH}}} \right]$$

. . .

$$\text{Slot} \left[ n \cdot \frac{2^{\mu_{PDSCH}}}{2^{\mu_{PDCCH}}} \right] + K_0$$

# FIG.9

FIG.10

1101  (a) TDD only configuration

UL subband (1110)

1112  1111  (b) SBFD configuration 1

UL subband (1120)

1122  1121  (c) SBFD configuration 2

1132  1133  1131  (d) SBFD configuration 3

1134

FIG.11

FIG.12

FIG.13

$T_{CI}$

$B_{CI}$

UL
subband

(1400)

## FIG.14A

$T_{CI}$

$B_{CI}$

UL
subband

UL
symbol

(1410)

## FIG.14B

$T_{CI}$

$B_{CI,reduced}$ $B_{CI}$

UL
subband

(1420)

## FIG.14C

$T_{CI}$

$B_{CI,reduced}$ $B_{CI}$

UL
subband

UL
symbol

(1430)

(1431) (1432)

## FIG.14D

FIG.15A    FIG.15B    FIG.15C

START

UE CONFIRMS REFERENCE UPLINK RESOURCE
CORRESPONDING TO UPLINK TRANSMISSION
CANCELATION INDICATION ~1600

UE CONFIRMS TYPE OF SYMBOLS INCLUDED
IN REFERENCE UPLINK RESOURCE ~1610

UE GENERATES $G_{CI}$ TIME-DOMAIN PARTITIONS
(SYMBOL SETS) BASED ON WHETHER MULTIPLE
SYMBOL TYPES ARE INCLUDED ~1620

UE DIVIDES EACH TIME-DOMAIN PARTITION INTO
NBI IN FREQUENCY DOMAIN, AND GENERATE TOTAL
OF $N_{CI}=G_{CI}*N_{BI}$ TIME-FREQUENCY SLICES ~1630

UE ACQUIRES $N_{CI}$ UPLINK CANCELATION
INDICATION, INTERPRETS INDICATION, ACQUIRES
TIME-FREQUENCY DOMAIN IN WHICH UPLINK
TRANSMISSION CANCELATION IS NECESSARY,
AND CANCEL TRANSMISSION OF UPLINK CHANNEL
AND SIGNAL OVERLAPPING WITH TIME-FREQUENCY
DOMAIN ~1640

END

FIG.16

FIG.17

FIG.18

FIG.19A

FIG.19B

FIG.20

(2105)

| Base station processor | ← | Base station receiver | ~(2100) |

Base station processor → Base station transmitter ~(2110)

# FIG.21

## INTERNATIONAL SEARCH REPORT

| International application No. |
| --- |
| **PCT/KR2024/011306** |

### A. CLASSIFICATION OF SUBJECT MATTER

**H04W 72/232**(2023.01)i; **H04W 72/1268**(2023.01)i; **H04W 72/21**(2023.01)i; **H04W 72/0446**(2023.01)i; **H04W 72/0453**(2023.01)i; **H04W 72/231**(2023.01)i; **H04W 72/53**(2023.01)i; **H04W 48/08**(2009.01)i; **H04W 8/24**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04W 72/232(2023.01); H04L 5/14(2006.01); H04W 72/04(2009.01); H04W 72/12(2009.01); H04W 72/14(2009.01); H04W 72/21(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SBFD, TDD, DCI format, UL cancellation indication, reference UL resource, SBFD symbol, non-SBFD symbol, first indicator, second indicator, cell common, partition, overlap

### C. DOCUMENTS CONSIDERED TO BE RELEVANT

| Category* | Citation of document, with indication, where appropriate, of the relevant passages | Relevant to claim No. |
| --- | --- | --- |
| Y | US 2022-0159659 A1 (QUALCOMM INCORPORATED) 19 May 2022 (2022-05-19)<br>See paragraphs [0078]-[0191]; claims 1-2; and figure 12. | 1-15 |
| Y | CMCC. Discussion on subband non-overlapping full duplex. R1-2301000, 3GPP TSG RAN WG1 #112. Athens, Greece. 17 February 2023.<br>See sections 3-3.2.2; and figures 6 and 9. | 1-15 |
| A | WO 2021-195832 A1 (QUALCOMM INCORPORATED) 07 October 2021 (2021-10-07)<br>See paragraphs [0101]-[0109]; and claim 1. | 1-15 |
| A | US 2023-0163937 A1 (SAMSUNG ELECTRONICS CO., LTD.) 25 May 2023 (2023-05-25)<br>See paragraphs [0170]-[0171]. | 1-15 |
| A | US 2023-0087594 A1 (SONY GROUP CORPORATION) 23 March 2023 (2023-03-23)<br>See paragraphs [0075]-[0222]; and figures 6-16. | 1-15 |

☐ Further documents are listed in the continuation of Box C.　　☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **11 November 2024** | **11 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 757 472 A1**

| INTERNATIONAL SEARCH REPORT Information on patent family members | | International application No. PCT/KR2024/011306 | |
|---|---|---|---|

| Patent document cited in search report | | Publication date (day/month/year) | Patent family member(s) | | | Publication date (day/month/year) |
|---|---|---|---|---|---|---|
| US | 2022-0159659 A1 | 19 May 2022 | CN | 116530182 | A | 01 August 2023 |
| | | | EP | 4245086 | A1 | 20 September 2023 |
| | | | US | 11696315 | B2 | 04 July 2023 |
| | | | WO | 2022-103540 | A1 | 19 May 2022 |
| WO | 2021-195832 A1 | 07 October 2021 | None | | | |
| US | 2023-0163937 A1 | 25 May 2023 | CN | 116155470 | A | 23 May 2023 |
| | | | DE | 102022130107 | A1 | 25 May 2023 |
| | | | KR | 10-2023-0074052 | A | 26 May 2023 |
| | | | TW | 202325058 | A | 16 June 2023 |
| | | | US | 2023-0163936 | A1 | 25 May 2023 |
| US | 2023-0087594 A1 | 23 March 2023 | CN | 115349295 | A | 15 November 2022 |
| | | | EP | 4111798 | A1 | 04 January 2023 |
| | | | JP | 2023-519230 | A | 10 May 2023 |
| | | | KR | 10-2022-0162698 | A | 08 December 2022 |
| | | | WO | 2021-198029 | A1 | 07 October 2021 |

Form PCT/ISA/210 (patent family annex) (July 2022)